# EUROPEAN PATENT APPLICATION

(11) **EP 4 822 604 A1**
(43) Date of publication of application: **14.10.2026**
(21) Application number: 24918151.2
(22) Date of filing: 28.10.2024
(51) Int. Cl.: G06N 3/08

(54) **MODEL REASONING METHOD AND COMMUNICATION APPARATUS**

(30) Priority: 16.01.2024 CN 202410063848
(71) Applicant: Huawei Technologies Co., Ltd., Shenzhen, Guangdong 518129 (CN)
(72) Inventor: SUN, Zhao, Shenzhen, Guangdong 518129 (CN); ZHANG, Yongjing, Shenzhen, Guangdong 518129 (CN)
(74) Representative: Gill Jennings & Every LLP
(86) International application number: PCT/CN2024/127642
(87) International publication number: WO 2025/152542

(57) **Abstract**

This application provides a model inference method and a communication apparatus, and relates to the communication field. The method includes: receiving model inference information from a first network device, where the model inference information is used by a terminal to perform inference of a first partial model related to a session; and performing inference of the first partial model based on the model inference information, and sending an inference result of the first partial model to a second network device; or receiving an inference result of a second partial model related to the session from the second network device, and performing inference of the first partial model based on the inference result of the second partial model and the model inference information. The foregoing method may be performed, for example, by the terminal. According to this application, a terminal device and a network side device may perform inference negotiation, so that an inference task can be dynamically allocated, thereby implementing effective collaboration and on-demand/reasonable inference task allocation between the terminal device and the network side device.

## Description

This application claims priority to Chinese Patent Application No. 202410063848.2, filed with the China National Intellectual Property Administration on January 16, 2024 and entitled "MODEL INFERENCE METHOD AND COMMUNICATION APPARATUS", which is incorporated herein by reference in its entirety.

### TECHNICAL FIELD

This application relates to the communication field, and more specifically, to a model inference method and a communication apparatus.

### BACKGROUND

Model inference is a process of generating a result by a model. When a user uses an application program or a data channel (data channel, DC) applet, model inference is often required. For example, face change and voice translation in a video call process both involve model inference. Model inference has a high requirement on computing power. If computing power of a terminal is insufficient, model inference effect is poor or a delay is long, affecting user experience.

### SUMMARY

This application provides a communication method and a communication apparatus, to implement effective collaboration between a terminal and a network device and on-demand inference task allocation.

According to a first aspect, a communication method is provided. The method may be performed by a terminal, or may be performed by a component (for example, a processor, a chip, or a chip system) of the terminal, or may be implemented by a logical module or software that can implement all or some of functions of the terminal. For ease of description, an example in which the method is performed by the terminal is used below for description.

The method includes: receiving model inference information from a first network device, where the model inference information is used by the terminal to perform inference of a first partial model related to a session; and performing inference of the first partial model based on the model inference information, and sending an inference result of the first partial model to a second network device; or receiving an inference result of a second partial model related to the session from the second network device, and performing inference of the first partial model based on the inference result of the second partial model and the model inference information.

According to the model inference method provided in this application, inference negotiation may be performed between a network device and the terminal. To be specific, the first network device may determine work division of model inference of a session, that is, determine which part of model inference is responsible for by the terminal and which part of model inference is responsible for by the second network device. In this way, an inference task may be dynamically allocated between the terminal and the second network device by the first network device, to implement effective collaboration and on-demand model inference task allocation between the terminal and the second network device. Further, the method can avoid a problem that model inference effect is poor or a delay is long due to insufficient computing power of the terminal, thereby improving user experience.

It should be noted that, in this application, work division of model inference of a session is work division of inference of a model (denoted as a target model in this application) related to the session (for example, a service of the session). The inference task described in this application is also inference on the target model.

In a possible implementation, before receiving the model inference information from the first network device, the method further includes: sending inference capability information of the terminal to the first network device. For example, the inference capability information includes one or more of the following: available computing power for inference, inference precision, an available cache for inference, an artificial intelligence (artificial intelligence, AI)/deep learning (deep learning, ML) framework and a version number for inference, or a supported intermediate data compression algorithm.

Based on the foregoing technical solution, after receiving the inference capability information of the terminal, the first network device may determine, based on the inference capability information of the terminal, whether to split an inference task (or a model related to the session or inference of the model related to the session), and can properly split the inference task based on the inference capability information of the terminal when determining to split the inference task.

In a possible implementation, the available computing power for inference is determined by the terminal based on a configuration of a computing resource of the terminal, or the available computing power for inference is determined by the terminal based on a remaining computing resource or an available computing resource of the terminal.

In a possible implementation, before receiving the model inference information, the method further includes: sending information about the session and/or a current connection bandwidth of the terminal to the first network device.

Based on the foregoing technical solution, the first network device may determine, based on the information about the session and/or the current connection bandwidth of the terminal, whether to split an inference task, and can properly split the inference task based on the inference capability information of the terminal when determining to split the inference task.

In a possible implementation, the model inference information includes an identifier of the first partial model.

Based on the foregoing technical solution, the terminal may determine, based on the identifier of the first partial model, to perform inference of the first partial model.

In a possible implementation, the model inference information further includes one or more of the following: a quantity of parameters of the first partial model, a type of output data of inference, an intermediate data tensor shape, an intermediate data tensor structure, or an intermediate data compression algorithm.

For example, based on the type of the output data of inference, the terminal may learn whether to send an inference result to the second network device. For example, the terminal may perform encoding or decoding based on the intermediate data tensor shape and the intermediate data tensor structure. For example, the terminal may compress encoded data based on the intermediate data compression algorithm. Compressing the encoded data can reduce a data transmission amount and the data transmission amount does not exceed the current connection bandwidth of the terminal.

In a possible implementation, sending the inference capability information to the first network device includes: sending a first message to the first network device, where the first message includes the inference capability information, and the first message is a registration request message or a session call message.

Based on the foregoing technical solution, the terminal may send the inference capability information of the terminal to the first network device in a registration procedure or a session call procedure.

In a possible implementation, the second network device is an artificial intelligence AI/deep learning ML media plane network element, and the first network device is an AI/ML control plane network element; or the second network device is a media resource function network element, and the first network device is an application server; or the second network device is an internet service media server, and the first network device is an internet service signaling server.

In a possible implementation, sending the inference capability information of the terminal to the first network device includes: sending the inference capability information to the first network device when the second network device has a model inference capability.

Based on the foregoing technical solution, the terminal sends the inference capability information to the first network device only when determining that the second network device has the model inference capability. In this way, unnecessary signaling overheads can be reduced.

In a possible implementation, before sending the inference capability information to the first network device when the second network device has the model inference capability, the method further includes: obtaining capability indication information of the second network device, where the capability indication information indicates that the second network device has the model inference capability.

Based on the foregoing technical solution, the terminal may determine, based on the capability indication information of the second network device, that the second network device has the model inference capability, and the terminal may further send the inference capability information of the terminal to the first network device, so that the first network device can determine, based on the inference capability information of the terminal, whether to split an inference task, and properly split the inference task when determining to split the inference task.

According to a second aspect, a communication method is provided. The method may be performed by a first communication apparatus, or may be performed by a component (for example, a processor, a chip, or a chip system) of the first communication apparatus, or may be implemented by a logical module or software that can implement all or some functions of the first communication apparatus.

The method includes: determining model inference information, and sending the model inference information to a terminal. The model inference information is used by the terminal to perform inference of a first partial model related to a session.

According to the model inference method provided in this application, inference negotiation may be performed between a network device and the terminal. To be specific, a first network device may determine work division of model inference of a session, that is, determine which part of model inference is responsible for by the terminal and which part of model inference is responsible for by a second network device. In this way, an inference task may be dynamically allocated between the terminal and the second network device by the first network device, to implement effective collaboration and on-demand model inference task allocation between the terminal and the second network device. Further, the method can avoid a problem that model inference effect is poor or a delay is long due to insufficient computing power of the terminal, thereby improving user experience.

In a possible implementation, the model inference information includes an identifier of the first partial model.

Based on the foregoing technical solution, the terminal may determine, based on the identifier of the first partial model, to perform inference of the first partial model.

In a possible implementation, the model inference information further includes one or more of the following: a quantity of parameters of the first partial model, a type of output data of inference, an intermediate data tensor shape, an intermediate data tensor structure, or an intermediate data compression algorithm.

In a possible implementation, determining the model inference information includes: determining the model inference information based on one or more of the following: inference capability information of the terminal, inference capability information of a second network device, information about the session, or a current connection bandwidth of the terminal, where the second network device is configured to perform inference of a second partial model related to the session.

For example, model inference information of the terminal may include one or more of the following: available computing power for inference, inference precision, an available cache for inference, an AI/ML framework and a version number for inference, or a supported intermediate data compression algorithm. For example, model inference information of the second network device includes one or more of the following: available computing power for inference, inference precision, an available cache for inference, an AI/ML framework and a version number for inference, or a supported intermediate data compression algorithm.

Based on the foregoing technical solution, the first network device may determine whether to split an inference task, and properly split the inference task when determining to split the inference task. For example, the second network device may obtain a computing power requirement for inference of the session through calculation based on the available computing power for inference of the terminal, the information about the session, and the current connection bandwidth of the terminal, determine whether the available computing power for inference of the terminal is exceeded, determine work division of inference of the session with reference to the available computing power for inference of the second network device, and determine, based on a data amount of intermediate data and the current connection bandwidth of the terminal, whether to compress transmitted data.

In a possible implementation, the method further includes: receiving the inference capability information of the terminal from the terminal.

In a possible implementation, the inference capability information of the terminal is carried in a registration request message or a session call message.

In a possible implementation, before determining the model inference information, the method further includes: sending capability indication information of the second network device to the terminal, where the capability indication information indicates that the second network device has a model inference capability.

Based on the foregoing technical solution, the terminal may send the inference capability information of the terminal to the first network device based on the capability indication information of the second network device when determining that the second network device has the model inference capability, so that the first network device can determine, based on the inference capability information of the terminal, whether to split an inference task, and properly split the inference task when determining to split the inference task.

In a possible implementation, the method further includes: sending an identifier of the second partial model related to the session to the second network device.

Based on the foregoing technical solution, the second network device may determine, based on the identifier of the second partial model, to perform inference of the second partial model.

In a possible implementation, sending the identifier of the second partial model related to the session to the second network device includes: sending a resource request message to the second network device, where the resource request message includes the identifier of the second partial model, the resource request message is used to request the second network device to reserve a resource, and the resource is used to perform inference of the second partial model.

Based on the foregoing technical solution, the second network device may determine, based on the resource request message, that the second network device performs inference of the second partial model, and may reserve the resource to perform inference of the second partial model.

In a possible implementation, the resource request information further includes address information of the terminal.

In a possible implementation, sending the identifier of the second partial model related to the session to the second network device includes: sending indication information to the second network device, where the indication information indicates the second network device to perform inference of the second partial model, and the indication information includes the identifier of the second partial model.

In other words, the identifier of the second partial model may be carried in the indication information to indicate to the second network device that the second network device performs inference of the second partial model.

According to a third aspect, a communication method is provided. The method may be performed by a second communication apparatus, or may be performed by a component (for example, a processor, a chip, or a chip system) of the second communication apparatus, or may be implemented by a logical module or software that can implement all or some functions of the second communication apparatus.

The method includes: receiving an identifier of a second partial model from a first network device; and receiving an inference result of a first partial model from a terminal, and performing inference of the second partial model based on the inference result of the first partial model; or performing inference of the second partial model, and sending, to the terminal, an inference result of the second partial model that is obtained by performing inference of the second partial model.

According to the model inference method provided in this application, a second network device and the terminal each are responsible for performing inference of a partial model. The method can avoid a problem that model inference effect is poor or a delay is long due to insufficient computing power of the terminal, thereby improving user experience.

In a possible implementation, receiving the identifier of the second partial model from the first network device includes: receiving a resource request message from the first network device, where the resource request message includes the identifier of the second partial model, the resource request message is used to request the second network device to reserve a resource, and the resource is used to perform inference of the second partial model.

Based on the foregoing technical solution, the second network device may determine, based on the resource request message, that the second network device performs inference of the second partial model, and may reserve the resource to perform inference of the second partial model.

In a possible implementation, the resource request message further includes address information of the terminal.

In a possible implementation, receiving the identifier of the second partial model from the first network device includes: receiving indication information from the first network device, where the indication information indicates the second network device to perform inference of the second partial model, and the indication information includes the identifier of the second partial model.

In other words, the identifier of the second partial model may be carried in the indication information to indicate to the second network device that the second network device performs inference of the second partial model.

In a possible implementation, the method further includes: sending inference capability information of the second network device to the first network device. For example, model inference information of the second network device includes one or more of the following: available computing power for inference, inference precision, an available cache for inference, an AI/ML framework and a version number for inference, or a supported intermediate data compression algorithm.

Based on the foregoing solution, the first network device may properly divide work of an inference task based on the inference capability information of the second network device.

According to a fourth aspect, a communication apparatus is provided. The apparatus is configured to perform the method according to any one of the possible implementations of the first aspect to the third aspect. Specifically, the apparatus may include a unit and/or a module, for example, a processing unit and/or a communication unit, configured to perform the method according to any one of the possible implementations of the first aspect to the third aspect.

In an implementation, the apparatus is a communication device (for example, a terminal, a first network device, or a second network device). When the apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a terminal, a first network device, or a second network device). When the apparatus is a chip, a chip system, or a circuit used in a communication device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fifth aspect, a communication apparatus is provided. The apparatus includes at least one processor, configured to execute a computer program or instructions stored in a memory, to perform the method according to any one of the possible implementations of the first aspect to the third aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a communication device (for example, a terminal, a first network device, or a second network device).

In another implementation, the apparatus is a chip, a chip system, or a circuit used in a communication device (for example, a terminal, a first network device, or a second network device).

According to a sixth aspect, a processor is provided, to perform the methods according to the foregoing aspects.

Operations such as sending and obtaining/receiving related to the processor may be understood as operations such as outputting and inputting of the processor or sending and receiving operations performed by a radio frequency circuit and an antenna, unless otherwise specified, or provided that the operations do not contradict actual functions or internal logic of the operations in related descriptions. This is not limited in this application.

According to a seventh aspect, a computer-readable storage medium is provided. The computer-readable medium stores program code to be executed by user equipment, and the program code is used to perform the method according to any one of the possible implementations of the first aspect to the third aspect.

According to an eighth aspect, a computer program product including instructions is provided. When the computer program product runs on a computer, the computer is caused to perform the method according to any one of the possible implementations of the first aspect to the third aspect.

According to a ninth aspect, a communication system is provided, including an apparatus configured to perform the method according to any possible implementation of the first aspect, an apparatus configured to perform the method according to any possible implementation of the second aspect, and an apparatus configured to perform the method according to any possible implementation of the third aspect.

In an example, the apparatus configured to perform the method according to any possible implementation of the first aspect is a terminal, the apparatus configured to perform the method according to any possible implementation of the second aspect is a first network device, and the apparatus configured to perform the method according to any possible implementation of the third aspect is a second network device. Optionally, the first network device and the second network device are a same network device.

### BRIEF DESCRIPTION OF DRAWINGS

FIG. 1 is a diagram of a communication system to which an embodiment of this application is applicable;
FIG. 2 is a diagram of a communication system to which another embodiment of this application is applicable;
FIG. 3 is a diagram of a communication system to which another embodiment of this application is applicable;
FIG. 4 is a diagram of a model inference method 400 according to an embodiment of this application;
FIG. 5 is a schematic flowchart of a model inference method 500 according to an embodiment of this application;
FIG. 6 is a schematic flowchart of a model inference method 600 according to an embodiment of this application;
FIG. 7 is a schematic flowchart of a model inference method 700 according to an embodiment of this application;
FIG. 8 is a schematic flowchart of a model inference method 800 according to an embodiment of this application;
FIG. 9 is a diagram of a communication apparatus 900 according to an embodiment of this application; and
FIG. 10 is a diagram of a communication apparatus 1000 according to an embodiment of this application.

### DESCRIPTION OF EMBODIMENTS

The following describes the technical solutions in embodiments of this application with reference to the accompanying drawings in embodiments of this application.

In the descriptions of this application, unless otherwise specified, "/" indicates that associated objects are in an "or" relationship. For example, A/B may represent A or B. In this application, "and/or" merely describes an association relationship between associated objects and indicates that three relationships may exist. For example, A and/or B may represent three cases: Only A exists, both A and B exist, and only B exists, where A and B may be singular or plural. In addition, in the descriptions of this application, unless otherwise specified, "a plurality of" means two or more. In addition, "at least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

Sequence numbers do not mean execution sequences in various method embodiments of this application. The execution sequences should be determined based on functions and internal logic, and should not be construed as any limitation on the implementation processes of embodiments of this application.

It may be understood that, in this application, descriptions similar to "in a case that...", "if...", "when...", "it is assumed that...", and the like may be used interchangeably. In addition, these descriptions all mean corresponding processing performed in an objective situation, are not intended to limit a time, and do not require a determining action during implementation and do not mean that there is another limitation.

It may be understood that, in this application, information indicated by indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

It may be understood that, in some scenarios, some optional features in embodiments of this application may be independently implemented without depending on another feature, for example, a solution on which the optional features are currently based, to resolve a corresponding technical problem and achieve corresponding effects; or in some scenarios, the optional features may be combined with other features based on a requirement. Correspondingly, apparatuses provided in embodiments of this application may also correspondingly implement these features or functions. Details are not described herein.

It may be understood that, in embodiments of this application, "network element A" and "A" may be replaced with each other. For example, "MRF network element" may be replaced with "MRF", and "AS" may be replaced with "AS network element". In addition, a service in embodiments of this application may be an AL/ML service.

In this application, unless otherwise specified, for same or similar parts in embodiments, reference may be made to each other. In embodiments of this application and the implementations/implementation methods/methods in embodiments, unless otherwise specified or a logical conflict occurs, terms and/or descriptions are consistent and may be mutually referenced between different embodiments and between the implementations/implementation methods/methods in embodiments. Technical features in the different embodiments and the implementations/implementation methods/methods in embodiments may be combined to form a new embodiment, implementation, implementation method, or method based on an internal logical relationship thereof. The following implementations of this application are not intended to limit the protection scope of this application.

The technical solutions provided in this application may be applied to various communication systems, for example, a 5th generation (5th generation, 5G) system or a new radio (new radio, NR) system, an over the top (over the top, OTT) system (or a system that provides various application services for a user through the internet), a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device to device, D2D) communication, vehicle-to-everything (vehicle-to-everything, V2X) communication, machine-to-machine (machine to machine, M2M) communication, machine type communication (machine type communication, MTC), an internet of things (internet of things, IoT) communication system, or another communication system.

A terminal in embodiments of this application may also be referred to as user equipment (user equipment, UE), an access terminal, a mobile device, a user terminal, a terminal device, a wireless communication device, a user agent, or a user apparatus. For example, the terminal may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), or a wireless terminal in smart home (smart home).

In embodiments of this application, the terminal is sometimes described as UE, and the UE and the terminal may be replaced with each other. An apparatus configured to implement a function of a terminal may be a terminal, or may be an apparatus that can support the terminal in implementing the function, for example, a chip system or a chip. The apparatus may be installed on the terminal. In embodiments of this application, the chip system may include a chip, or may include a chip and another discrete component.

A network device in embodiments of this application may be a device configured to communicate with the terminal. In an example, the network device may be a device in a communication network configured to provide a service for the terminal. In embodiments of this application, the communication network may include an IP multimedia subsystem (IP multimedia subsystem, IMS) network of an operator, or may include an established communication network, or may include another communication network. This is not limited.

In an example, the network device may include at least one of the following: an artificial intelligence (Artificial Intelligence, AI)/deep learning (deep learning, ML) control plane function (AI/ML control function, AI/ML-C) network element, an AI/ML media plane function (AI/ML media function, AI/ML-M) network element, an application server (application server, AS), a media resource function network element, and an OTT server. The following briefly describes the devices.
1. AI/ML-C network element: The AI/ML-C network element is a core network control plane network element of an AI/ML service, and can provide an AI/ML inference negotiation function. For example, the AI/ML-C network element may coordinate an inference operation of an AI/ML service between a terminal and a network side device (for example, an AI/ML-M network element), and determine work division of the inference operation.
2. AI/ML-M network element: The AI/ML-M network element is a core network media plane network element of an AI/ML service, and can be configured to provide an AI/ML model inference function.

It may be understood that the AI/ML-C network element and the AI/ML-M network element may be understood as network elements configured to implement different functions, and may be combined into a network slice as required. The AI/ML-C network element and the AI/ML-M network element may be independent hardware devices, or may be integrated into a same hardware device, or may be network elements in a hardware device, or may be software functions running on dedicated hardware, or may be instantiated virtualization function modules on a platform (for example, a cloud platform). Specific forms of the foregoing network elements are not limited in this application. It may be further understood that the foregoing names are defined merely for distinguishing between different functions, and should not constitute any limitation on this application.

It may be further understood that the AI/ML-C network element and the AI/ML-M network element may be provided by an IMS operator, or may be provided by a third party. This is not limited.

3. AS: The AS is a server that provides an application layer service for a terminal. The AS is an AS in an IMS.

4. Media resource function network element: The media resource function network element is configured to process media data (for example, media data related to a session) (for example, perform inference on an AI/ML model), and may participate in inference negotiation. In an example, the media resource function network element may be a multimedia resource function (multimedia resource function, MRF) network element in a 3GPP standard specification, including a multimedia resource function controller (multimedia resource function controller, MRFC) and a multimedia resource function processor (multimedia resource function processor, MRFP).

5. OTT server: The OTT server is a server configured to provide an over the top (over the top, OTT) service (which is also referred to as an internet service), is also referred to as an internet service server, and may provide an inference negotiation function, for example, coordinate an inference operation of an AI/ML service between a terminal and a network side device, and determine work division of the inference operation. In addition, the OTT server may be further configured to implement signaling processing and routing of the OTT AI/ML service, and media processing of the AI/ML service. In an example, the OTT server may include an OTT AI/ML service signaling server (or an internet service signaling server), an OTT AI/ML service media processing server (or an internet service media processing server), and an OTT AI/ML service routing server. For example, the OTT service signaling server is responsible for processing signaling or a message related to the AI/ML service, the OTT service media processing server is responsible for processing media data related to the AI/ML service, and the OTT service routing server is responsible for routing or forwarding signaling or a message related to the AI/ML service. A name of the OTT server does not limit the protection scope of embodiments of this application.

The network device and the terminal of this application may be deployed on land, including indoor or outdoor devices, handheld devices, or vehicle-mounted devices; or may be deployed on water; or may be deployed on an air plane, a balloon, or a satellite in the air. Scenarios in which the network device and the terminal are located are not limited in embodiment of this application.

For ease of understanding of embodiments of this application, terms in this application are briefly described.
1. AI/ML model: The AI/ML model is also referred to as a model for short in this application. The AI/ML model is essentially a function relationship, and the function does not have a corresponding parsing expression, but is represented by a nested combination of a plurality of linear or non-linear operations. The AI/ML model may be represented as y=f(x), where x represents a model input, y represents a model output, and f represents a function formed by both a model structure and a parameter. For example, a simple AI model, namely, a single-layer fully connected neural network model, is expressed as follows: $y = σ \left(Wx+b\right)$

Herein, σ is an activation function. For example, σ may be a hyperbolic tangent function, that is, tanh, and tanh(x)=[exp(x)-exp(-x)]/[exp(x)+exp(-x)]. If an input of tanh(x) is a vector, a tanh operation is performed on each component of the vector element by element, where both W and b are neural network parameters that can be trained.

2. Model parameter: The model parameter may be understood as a variable that can be adjusted in a model, and is derived by training an algorithm and data and is used to adjust the model to adapt to different tasks and scenarios.

3. Model inference: Model inference is inference on a model, may be also referred to as inference or AI/ML inference for short, and is a process of inputting given data x into an AI/ML model to obtain an output y=f(x). In other words, model inference is a process of obtaining an output of the AI/ML model, or a process of generating a result for the AI/ML model.

In one manner, a terminal may use a native AI/ML application program or an installed AI/ML application program, and the application program performs inference based on an inference framework built in the terminal (for example, built in a GMS/HMS of an operating system).

In another manner, a terminal uses a DC applet downloaded from a network, and the DC applet performs inference based on WebNN built in a browser.

4. Split inference: Split inference means that a complete inference task (that is, an inference task described below) related to a session is split between a terminal and a network based on specific work division, and the terminal and the network perform AI/ML model inference that they are respectively responsible for.

5. Data channel (data channel, DC): The data channel described in embodiments of this application may be, for example, an IMS data channel (IMS data channel), that is, a data channel in an IMS, and may be used to transmit data based on a stream control transmission protocol (stream control transmission protocol, SCTP). In other words, the data channel may be a logical channel or a data connection for transmitting data based on SCTP. In embodiments of this application, the DC may be used to transmit signaling or data, for example, inference work division interaction information and/or an inference result.

6. Computing power: In embodiments of this application, the computing power is used to measure an inference capability of a device for an AI/ML model.

7. Intermediate data: The intermediate data is output data obtained after partial AI/ML model inference is performed after split inference, and is not a final inference result.

8. Operator: An AI/ML model consists of computing units, and these computing units are referred to as operators. The operator corresponds to computing logic at each layer of a neural network.

9. Tensor: The tensor is a container for calculating data by an operator, including input data and output data.

10. Tensor descriptor: The tensor descriptor describes input data and output data of a tensor, and main attributes include a name, a shape, a data type, and a data layout format.

11. WebNN: The web neural network (Web neural network, WebNN) is a dedicated web application programming interface (application programming interface, API) defined by W3C (www.w3c.org) for hardware acceleration of neural network inference.

The foregoing briefly describes the terms in this application. Details are not described again in the following embodiments.

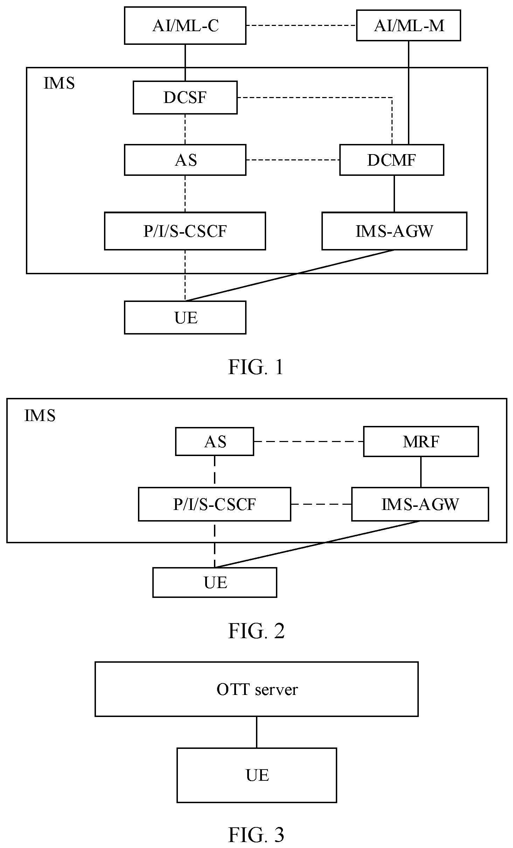

First, a network architecture to which this application is applicable is briefly described with reference to FIG. 1 to FIG. 3.

FIG. 1 is a diagram of a communication system to which an embodiment of this application is applicable. As shown in FIG. 1, the communication system may include UE, a network element in an IMS network, an AI/ML-C network element, and an AI/ML-M network element. The network element in the IMS network may include, for example, a data channel signaling plane function (data channel signaling function, DCSF) network element, an AS, a data channel media plane function (data channel media function, DCMF) network element, an IMS access gateway (IMS access gateway, IMS-AGW), a proxy-call session control function (proxy-call session control function, P-CSCF) network element, an interrogating-call session control function (interrogating-call session control function, I-CSCF) network element, and a serving-call session control function (serving-call session control function, S-CSCF) network element. The following briefly describes the network elements. For parts that are not described in detail, refer to the foregoing descriptions.
1. IMS-AGW: The IMS-AGW is mainly responsible for providing a media anchor point for accessing an IMS network ingress.
2. P-CSCF network element: The P-CSCF network element is located in a visited network, is an ingress node for a terminal to access the IMS network, and is mainly responsible for forwarding session initiation protocol (session initialization protocol, SIP) signaling between the terminal and a home network.
3. I-CSCF network element: The I-CSCF network element is located in a home network, is a unified entry point of the home network, and is mainly responsible for allocating or interrogating an S-CSCF network element that serves a terminal.
4. S-CSCF network element: The S-CSCF network element is located in a home network, is a central node of the IMS network, and is mainly responsible for registration, authentication, a session, routing, and service triggering of a terminal.
5. DCSF network element: The DCSF network element is a DC control plane network element, and is mainly responsible for providing a DC management function.
6. DCMF network element: The DCMF network element is a DC media plane network element, and is mainly responsible for providing a DC media processing function.

In an example, a function of the DCMF is supported by a media function (media function, MF) network element and/or an MRF network element.

In an example, functions of the AI/ML-C network element and the AI/ML-M network element are provided by a DC AS. In other words, the AI/ML-C network element and the AI/ML-M network element may be combined into one network element, and the network element may be a DC AS. The DC AS is a service AS network element of a DC service.

In an example, the AI/ML-C network element may be a DC AS, and a function of the AI/ML-M network element may be implemented by the DCMF.

FIG. 2 is a diagram of another communication system to which an embodiment of this application is applicable. As shown in FIG. 2, the communication system may include UE and a network element in an IMS network. The network element in the IMS network may include, for example, an AS, an MRF network element, an IMS-AGW, a P-CSCF network element, an I-CSCF network element, and an S-CSCF network element. For descriptions about the network elements, refer to the foregoing descriptions.

FIG. 3 is a diagram of another communication system to which an embodiment of this application is applicable. As shown in FIG. 3, the communication system may include UE and an OTT server. For descriptions about the network elements, refer to the foregoing descriptions.

It may be understood that FIG. 1 to FIG. 3 are merely simplified diagrams of examples for ease of understanding, and this application is not limited thereto. In an example, these communication systems each may further include other UE, or these communication systems each may further include other UE and a communication network to which the other UE belongs. FIG. 1 is used as an example. For differentiation, the UE in FIG. 1 is denoted as UE #1, and the other UE is denoted as UE #2. The UE #2 may communicate with the IMS network in FIG. 1. Optionally, the communication system may further include the UE #2 and an IMS network to which the UE #2 belongs. The UE #2 may communicate, through the IMS network to which the UE #2 belongs, with the IMS network to which the UE #1 belongs. For network elements in the IMS network to which the UE #2 belongs, refer to the network elements in the IMS network to which the UE #1 belongs. This is not limited.

It may be further understood that the network elements mentioned in embodiments of this application, for example, function network elements such as the P-CSCF network element, the I-CSCF network element, the MRF network element, and the S-CSCF network element, may be understood as network elements configured to implement different functions, and may be combined into a network slice as required. These network elements may be independent hardware devices, or may be integrated into a same hardware device, or may be network elements in a hardware device, or may be software functions running on dedicated hardware, or may be instantiated virtualization function modules on a platform (for example, a cloud platform). Specific forms of the foregoing network elements are not limited in this application. It may be further understood that the foregoing names are defined merely for distinguishing between different functions, and should not constitute any limitation on this application. This application does not exclude a possibility that another name is used in a 6G network and another future network.

When a user uses an application program or a DC applet, model inference is often required. For example, face change and voice translation in a video call process both involve model inference. Model inference generally has a high requirement on computing power. If a terminal performs model inference, an inference capability of the terminal may not meet a complex model inference requirement due to factors such as a software/hardware resource, a size, a weight, power consumption, and heat dissipation, affecting user experience. However, if a network device performs model inference, privacy of user data cannot be ensured, a delay-sensitive service cannot be met, and a large resource waste is caused to the network device.

In view of this, this application proposes a model inference method. Inference negotiation is performed between a network device and a terminal, and an inference task is dynamically allocated between the terminal and the network device based on different inference requirements, to implement effective collaboration and on-demand inference task allocation between the terminal and the network device.

The foregoing briefly describes the terms in this application. Details are not described again in the following embodiments.

The following describes in detail the method provided in embodiments of this application with reference to the accompanying drawings. It may be understood that, in a flowchart provided in this application, an example in which a terminal and a network device (for example, a first network device or a second network device) are used as execution bodies of the interaction diagram is mainly used to illustrate the method. However, an execution body of the interaction diagram is not limited in this application. For example, the terminal/network device in the flowchart may be a chip, a chip system, or a processor that supports the terminal/network device in implementing the method, or may be a logical module or software that can implement all or some functions of the terminal/network device.

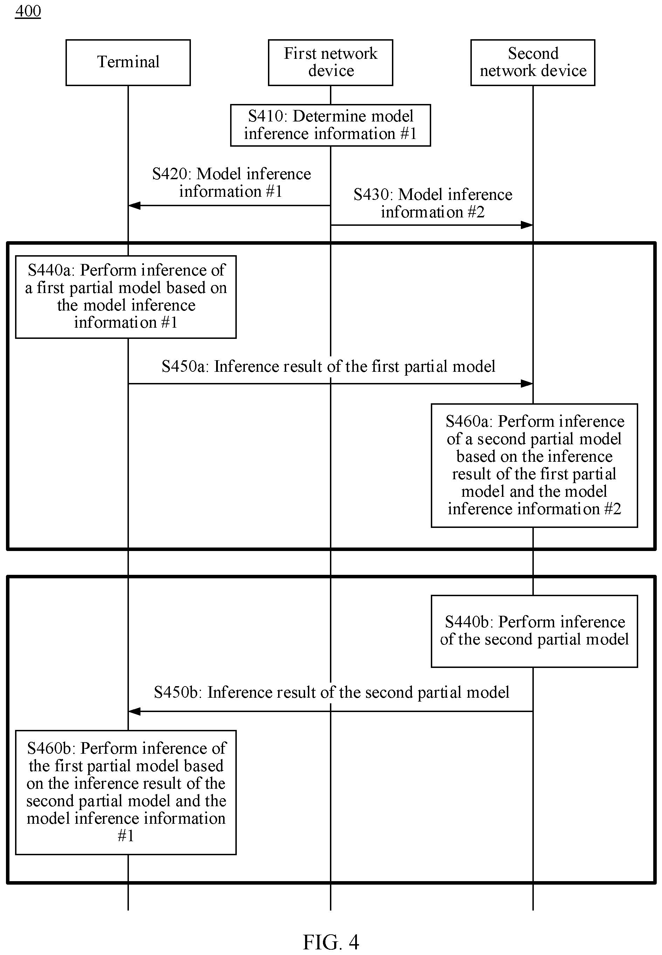

FIG. 4 is a diagram of a model inference method 400 according to an embodiment of this application. The following describes steps in the method 400.

S410: A first network device determines model inference information #1 (that is, an example of model inference information).

S420: The first network device sends the model inference information #1 to a terminal. Correspondingly, the terminal receives the model inference information #1 from the first network device.

The model inference information #1 may be used by the terminal to perform inference of a first partial model related to a session (that is, a current session, which may also be referred to as a first session).

It should be noted that the first partial model may be a part of a model related to the session, and inference of a second partial model related to the session may be performed by a network device (for example, a second network device). It should be understood that inference on the model related to the session is an inference task related to the session described above. The model related to the session is denoted as a target model in this application. For example, the model related to the session described in this application may be used for an AI/ML service (also referred to as a service for short in this specification) in the session.

For example, the model related to the session may be an AI/ML model related to the session, and the model related to the session, namely, the target model, may be divided into the first partial model and the second partial model. It should be noted that the first partial model is a sub-model of the target model, for example, denoted as a first sub-model, and the second partial model is the other sub-model of the target model, for example, denoted as a second sub-model.

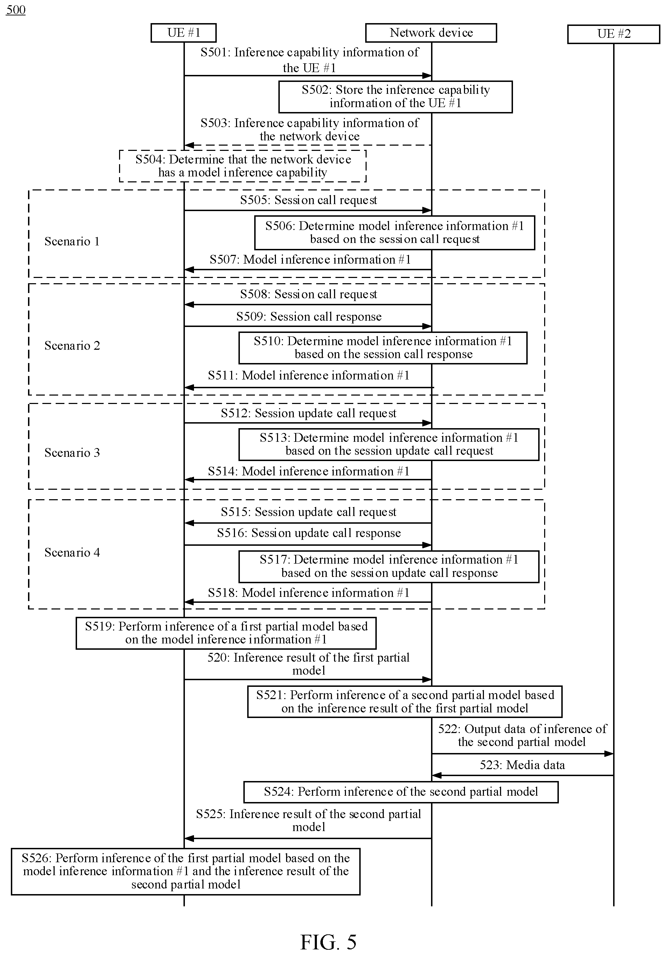

The first network device and the second network device may be logical function devices, and may be deployed on a same physical device, or may be deployed on different physical devices. This is not limited. For example, the first network device is an AI/ML control plane network element (for example, denoted as an AI/ML-C network element), and the second network device is an AI/ML media plane network element (for example, an AI/ML-M network element). For another example, the first network device is an AS, and the second network device is a media resource function network element (for example, an MRF network element). For another example, the first network device is an internet service signaling server (for example, an OTT signaling server), and the second network device is an internet service media server (for example, an OTT media server). The following describes in detail possible procedures in various cases with reference to FIG. 5 to FIG. 8.

Specifically, the model inference information #1 may include one or more of the following: an identifier of the first partial model, a quantity of parameters of the first partial model, a type of output data of inference, an intermediate data tensor shape, an intermediate data tensor structure, or an intermediate data compression algorithm.
(1) Identifier of the first partial model: identifying the first partial model.

It may be understood that the identifier of the first partial model is an identifier of the first sub-model.

It should be noted that the identifier of the first partial model in the model inference information #1 is optional.

In an optional implementation, the first network device may dynamically determine a model on which the terminal and the second network device perform inference, and indicate, to the terminal by including the identifier of the first partial model in the model inference information #1, that the terminal performs inference of the first partial model. This manner can implement flexible work division of an inference task.

In an example of the foregoing manner, the model inference information #1 may further include an identifier of the second partial model, that is, may simultaneously indicate that inference of the first partial model is performed by the terminal and inference of the second partial model is performed by the second network device.

In another optional manner, the terminal may learn, in a manner such as pre-negotiation, protocol specification, or network pre-configuration, that the terminal performs inference of the first partial model, but the terminal does not know when to perform inference of the first partial model. In this case, the model inference information #1 may include trigger information. For example, the trigger information is 1 bit (bit), and the trigger information is used to trigger the terminal to perform model inference. Correspondingly, the terminal may perform inference of the first partial model based on the trigger information. A difference from the foregoing manner is that the model inference information #1 in this manner may not include the identifier of the first partial model, so that signaling overheads can be reduced.

(2) Quantity of parameters of the first partial model: a quantity of parameters of the first sub-model, where the quantity of parameters of the first partial model may be used to evaluate model complexity and a calculation amount of the first partial model.

It should be noted that the quantity of parameters of the first partial model in the model inference information #1 is optional, and the model inference information #1 may alternatively not include the quantity of parameters of the first partial model.

(3) Type of the output data of inference: a type of output data obtained by the terminal by performing model inference, that is, a type of output data of inference of the first partial model.

If the terminal performs inference of the first partial model, and the output data of inference of the first partial model is used as an input of inference of the second partial model performed by the second network device, the type of the output data of inference is intermediate data, that is, intermediate. If the second network device performs inference of the second partial model, and output data of the second partial model is used as an input of inference of the first partial model performed by the terminal, the type of the output data of inference is a text type, an audio type, or the like (a specific type corresponds to a service corresponding to the target model).

The terminal may determine, based on the type of the output data of inference, a manner of sending an inference result. For example, if the type of the output data of inference is intermediate data, the inference result is sent through a DC, thereby ensuring transmission reliability of the inference result. If the type of the output data of inference is a text type, an audio type, or the like, the inference result is sent by using a real-time transport protocol (real-time transport protocol, RTP), thereby ensuring real-time performance of the inference result. It should be noted that two concepts of the output data of inference and the inference result herein are described in S440a and S440b below.

It should be noted that the model inference information #1 is a possible inference negotiation result (for example, denoted as a negotiation result 1) of the terminal and the first network device for the target model or the session. Another possible negotiation result (for example, denoted as a negotiation result 2) of inference negotiation for the target model is that the terminal performs inference of the target model, that is, the terminal performs inference of the entire target model without splitting the target model. For the negotiation result 2, the first network device may also send corresponding information (for example, denoted as inference model information #3) to the terminal to indicate the negotiation result. The inference model information #3 may not include a type of output data of inference, or the inference model information #3 may include a type of output data of inference, and the type of the output data of inference is a text type, an audio type, or the like (a specific type corresponds to a service corresponding to the target model).

### (4) Intermediate data tensor shape:

If the terminal performs inference of the first partial model, and the output data of inference of the first partial model is used as an input of inference of the second partial model performed by the second network device, the intermediate data tensor shape represents a tensor shape of the output data of inference of the first partial model. If the second network device performs inference of the second partial model, and the output data of inference of the second partial model is used as an input of inference of the first partial model performed by the terminal, the intermediate data tensor shape is a tensor shape of the output data of inference of the second partial model.

### (5) Intermediate data tensor structure:

If the terminal performs inference of the first partial model, and the output data of inference of the first partial model is used as an input of inference of the second partial model performed by the second network device, the intermediate data tensor structure represents a tensor structure of the output data of inference of the first partial model. If the second network device performs inference of the second partial model, and the output data of inference of the second partial model is used as an input of inference of the first partial model performed by the terminal, the intermediate data tensor structure is a tensor structure of the output data of inference of the second partial model.

In this application, the intermediate data tensor shape and the intermediate data tensor structure are used to encode and/or decode intermediate data. How to use the intermediate data tensor shape and the intermediate data tensor structure are described below in S440a to S460a and S440b to S460b.

It should be noted that the intermediate data tensor shape and/or the intermediate data tensor structure in the model inference information #1 are/is optional. In an optional implementation, the first network device may determine the intermediate data tensor shape and/or the intermediate data tensor structure and include the intermediate data tensor shape and/or the intermediate data tensor structure in the model inference information #1. In another optional implementation, the terminal may learn of the intermediate data tensor shape and/or the intermediate data tensor structure in a manner such as pre-negotiation, protocol specification, or network pre-configuration.

In addition, as described above, a negotiation result sent by the first network device may be the inference model information #3. In this case, the inference model information #3 may not include (4) and (5).

### (6) Intermediate data compression algorithm:

If the terminal performs inference of the first partial model, and the output data of inference of the first partial model is used as an input of inference of the second partial model performed by the second network device, the intermediate data compression algorithm represents a compression algorithm for encoded data obtained based on an output result of the first partial model. If the second network device performs inference of the second partial model, and the output data of inference of the second partial model is used as an input of inference of the first partial model performed by the terminal, the intermediate data compression algorithm represents a compression algorithm of the second network device for encoded data obtained based on an output result of the second partial model. For more detailed content of the intermediate data compression algorithm, refer to S440a to S460a.

For example, the intermediate data compression algorithm may be feature compression for video coding for machines (Feature Compression for Video Coding for Machines, FC_VCM) or None, where None indicates no compression.

It should be noted that the intermediate data compression algorithm in the model inference information #1 is optional. In an optional implementation, the first network device may determine the intermediate data compression algorithm and include the intermediate data compression algorithm in the model inference information #1. In another optional implementation, the terminal may learn of the intermediate data compression algorithm in a manner such as pre-negotiation, protocol specification, or network pre-configuration.

In addition, as described above, a negotiation result sent by the first network device may be the inference model information #3. In this case, the inference model information #3 may not include (6).

S430: The first network device sends model inference information #2 to the second network device. Correspondingly, the second network device receives the model inference information #2 from the first network device.

The model inference information #2 is used by the second network device to perform inference of the second partial model.

Optionally, before S430, the first network device may first determine the model inference information #2, and then send the model inference information #2 to the second network device. For example, when determining the model inference information #1, the first network device may also determine the model inference information #2.

The model inference information #2 may include one or more of the following: the identifier of the second partial model, a quantity of parameters of the second partial model, a type of output data of inference, an intermediate data tensor shape, an intermediate data tensor structure, or an intermediate data compression algorithm.
(1) Identifier of the second partial model: identifying the second partial model.

It may be understood that the identifier of the second partial model is an identifier of the second sub-model.

It should be noted that the identifier of the second partial model in the model inference information #1 is optional.

In an optional implementation, the second network device may dynamically determine a model on which the terminal and the second network device perform inference, and indicate, to the second network device by including the identifier of the second partial model in the model inference information #2, that the second network device performs inference of the second partial model. This manner can implement flexible work division of an inference task.

In an example of the foregoing manner, the model inference information #2 may further include the identifier of the first partial model, that is, may simultaneously indicate that inference of the first partial model is performed by the terminal and inference of the second partial model is performed by the second network device.

In another optional manner, the second network device may learn, in a manner such as pre-negotiation, protocol specification, or network pre-configuration, that the second network device performs inference of the second partial model, but the second network device does not know when to perform inference of the second partial model. In this case, the model inference information #2 may include trigger information. For example, the trigger information is 1 bit (bit), and the trigger information is used to trigger the second network device to perform model inference. Correspondingly, the second network device may perform inference of the second partial model based on the trigger information. A difference from the foregoing manner is that the model inference information #2 in this manner may not include the identifier of the second partial model, so that signaling overheads can be reduced.

It should be understood that the second network device may download the second partial model from a network based on the identifier of the second partial model, to perform inference of the second partial model. Alternatively, the second network device may pre-store a plurality of models, and the second network device may locally find the second partial model based on the identifier of the second partial model, to perform inference of the second partial model.

(2) Quantity of parameters of the second partial model: a quantity of parameters of the second sub-model, where the quantity of parameters of the second partial model may be used to evaluate model complexity and a calculation amount of the second partial model.

It should be noted that the quantity of parameters of the second partial model in the model inference information #2 is optional, and the model inference information #2 may alternatively not include the quantity of parameters of the second partial model.

(3) Type of the output data of inference: a type of output data obtained by the second network device by performing model inference, that is, a type of output data of inference of the second partial model.

If the second network device performs inference of the second partial model, and an output result of inference of the second partial model is used as an input of inference of the first partial model performed by the terminal, the type of the output data of inference is intermediate data, that is, intermediate. If the terminal performs inference of the first partial model, and the output data of inference of the first partial model is used as an input of inference of the second partial model performed by the second network device, the type of the output data of inference is a text type, an audio type, or the like (a specific type corresponds to a service corresponding to the target model).

The second network device may determine, based on the type of the output data of inference, a manner of sending an inference result. For example, if the type of the output data of inference is intermediate data, the inference result is sent through a DC, thereby ensuring transmission reliability of the inference result. If the type of the output data of inference is a text type, an audio type, or the like, the inference result is sent by using RTP, thereby ensuring real-time performance of the inference result. It should be noted that two concepts of the output data of inference and the inference result herein are described in S440a and S440b below.

It should be noted that the model inference information #2 is the negotiation result 1 described above. For the negotiation result 2 described above, the first network device may also send corresponding information (for example, denoted as inference model information #4) to the second network device to indicate the negotiation result. Because the second network device does not perform model inference, the inference model information #4 may not include a type of output data of inference.

### (4) Intermediate data tensor shape:

If the terminal performs inference of the first partial model, and the output data of inference of the first partial model is used as an input of inference of the second partial model performed by the second network device, the intermediate data tensor shape represents a tensor shape of the output data of inference of the first partial model. If the second network device performs inference of the second partial model, and the output data of inference of the second partial model is used as an input of inference of the first partial model performed by the terminal, the intermediate data tensor shape is a tensor shape of the output data of inference of the second partial model.

### (5) Intermediate data tensor structure:

If the terminal performs inference of the first partial model, and the output data of inference of the first partial model is used as an input of inference of the second partial model performed by the second network device, the intermediate data tensor structure represents a tensor structure of the output data of inference of the first partial model. If the second network device performs inference of the second partial model, and the output data of inference of the second partial model is used as an input of inference of the first partial model performed by the first network device, the intermediate data tensor structure is a tensor structure of the output data of inference of the second partial model.

In this application, the intermediate data tensor shape and the intermediate data tensor structure are used to encode and/or decode intermediate data. How to use the intermediate data tensor shape and the intermediate data tensor structure are described below in S440a to S460a and S440b to S460b.

It should be noted that the intermediate data tensor shape and/or the intermediate data tensor structure in the model inference information #2 are/is optional. In an optional implementation, the first network device may determine the intermediate data tensor shape and/or the intermediate data tensor structure and include the intermediate data tensor shape and/or the intermediate data tensor structure in the model inference information #2. In another optional implementation, the second network device may learn of the intermediate data tensor shape and/or the intermediate data tensor structure in a manner such as pre-negotiation, protocol specification, or network pre-configuration.

In addition, as described above, a negotiation result sent by the first network device may be the inference model information #4. In this case, the inference model information #4 may not include (4) and (5).

### (6) Intermediate data compression algorithm:

If the terminal performs inference of the first partial model, and the output data of inference of the first partial model is used as an input of inference of the second partial model performed by the second network device, the intermediate data compression algorithm represents a compression algorithm for encoded data obtained based on an output result of the first partial model. If the second network device performs inference of the second partial model, and the output data of inference of the second partial model is used as an input of inference of the first partial model performed by the terminal, the intermediate data compression algorithm represents a compression algorithm of the second network device for encoded data obtained based on an output result of the second partial model. For more detailed content of the intermediate data compression algorithm, refer to S440a to S460a and S440b to S460b.

For example, the intermediate data compression algorithm may be feature compression for video coding for machines (Feature Compression for Video Coding for Machines, FC_VCM) or None, where None indicates no compression.

It should be noted that the intermediate data compression algorithm in the model inference information #2 is optional. In an optional implementation, the first network device may determine the intermediate data compression algorithm and include the intermediate data compression algorithm in the model inference information #2. In another optional implementation, the second network device may learn of the intermediate data compression algorithm in a manner such as pre-negotiation, protocol specification, or network pre-configuration.

In addition, as described above, a negotiation result sent by the first network device may be the inference model information #4. In this case, the inference model information #4 may not include (6).

For example, the first network device may send the model inference information #2 to the second network device by using a resource request message, for example, send the identifier of the second partial model and/or the trigger information (which may also be referred to as indication information). The resource request message is used to request the first network device to reserve a resource, and the resource is used to perform inference of the second partial model. For example, the resource is computing power for performing inference of the second partial model.

It should be understood that the first network device may reserve in advance the resource used to perform inference of the second partial model, or may reserve the resource after receiving the resource request message.

For example, the first network device may further send address information of the terminal to the second network device. For example, the address information of the terminal may be sent by using the resource request message. The address information of the terminal is used to connect the terminal to the second network device. In this way, the terminal may send an inference result of the first partial model to the second network device, or may receive an inference result of the second partial model of the second network device.

The method 400 further includes S440a to S460a or S440b to S460b described below.

S440a: The terminal performs inference of the first partial model based on the model inference information #1.

An example in which the target model is used for a voice-to-text service in a video call is used. If voice information corresponding to the service is input to the terminal, the terminal performs inference of the first partial model on the voice information based on the model inference information #1. For example, the terminal may download the first partial model based on the identifier of the first partial model in the model inference information #1, and perform inference of the first partial model, to obtain the output data of inference of the first partial model. For another example, the terminal pre-stores the first partial model, and after receiving the model inference information #1, the terminal performs inference of the first partial model, to obtain the output data of inference of the first partial model. Then, after determining, based on the type of the output data of inference in the model inference information #1, that the output data of inference of the first partial model is intermediate data, the terminal encodes the output data of inference of the first partial model based on the intermediate data tensor shape and the intermediate data tensor structure in the model inference information #1, to obtain encoded data (denoted as first encoded data). Optionally, when the model inference information #1 includes the intermediate data compression algorithm, the terminal may compress the first encoded data by using the intermediate data compression algorithm in the model inference information #1, to obtain compressed first encoded data. The first encoded data is compressed, so that a data transmission amount can be reduced, and the data transmission amount does not exceed a connection bandwidth of the terminal.

For ease of description, in this application, the output data of inference of the first partial model, the first encoded data, and the compressed first encoded data are collectively referred to as the inference result of the first partial model.

S450a: The terminal sends the inference result of the first partial model to the second network device. Correspondingly, the second network device receives the inference result of the first partial model.

For example, the terminal sends the inference result of the first partial model to the second network device through a DC.

S460a: The second network device performs inference of the second partial model based on the inference result of the first partial model and the model inference information #2.

For example, if the inference result of the first partial model in S450a is the compressed first encoded data, the second network device may decompress the compressed first encoded data based on the intermediate data compression algorithm in the model inference information #2, to obtain the first encoded data. Next, the second network device decodes the first encoded data based on the intermediate data tensor shape and the intermediate data tensor structure in the model inference information #2, to obtain the output data of inference of the first partial model. Then, the second network device may use the output data of inference of the first partial model as an input of the second partial model based on the identifier of the second partial model in the model inference information #2, and perform inference of the second partial model, to obtain the output data of inference of the second partial model.

For example, if the inference result of the first partial model in S450a is the first encoded data, the second network device decodes the received inference result of the first partial model based on the intermediate data tensor shape and the intermediate data tensor structure in the model inference information #2, to obtain the output data of inference of the first partial model. Then, the second network device may use the output data of inference of the first partial model as an input of the second partial model based on the identifier of the second partial model in the model inference information #2, and perform inference of the second partial model, to obtain the output data of inference of the second partial model.

After obtaining the output data of inference of the second partial model, the second network device may send the output data of inference of the second partial model to another end of the session based on the type of the output data of inference in the model inference information #2. It may be understood that, if the target model is used for a voice-to-text service in a video call, the output data of inference of the second partial model is a text corresponding to voice information that is input to the terminal. It should be noted that, in this specification, the terminal is one end of the session, and another end of the session is another terminal or a server.

S440b: The second network device performs inference of the second partial model.

An example in which the target model is used for a voice-to-text service in a video call is still used. If voice information corresponding to the service is input to another end of the session, for example, another terminal, and the another end of the session sends the voice information to the second network device, after receiving the voice information, the second network device performs inference of the second partial model. For example, the second network device may perform inference of the second partial model based on the identifier of the second partial model in the model inference information #2, to obtain the output data of inference of the second partial model. Then, after determining, based on the type of the output data of inference in the model inference information #2, that the output data of inference of the second model part is intermediate data, the second network device encodes the inference result of the second partial model based on the intermediate data tensor shape and the intermediate data tensor structure in the model inference information #2, to obtain encoded data (denoted as second encoded data). Optionally, when the model inference information #2 includes the intermediate data compression algorithm, the second network device may compress the second encoded data by using the intermediate data compression algorithm in the model inference information #2, to obtain compressed second encoded data. The second encoded data is compressed, so that a data transmission amount can be reduced, and the data transmission amount does not exceed a connection bandwidth of the terminal.

For ease of description, in this application, the output data of inference of the second partial model, the second encoded data, and the compressed second encoded data are collectively referred to as the inference result of the second partial model.

S450b: The second network device sends the inference result of the second partial model to the terminal. Correspondingly, the terminal receives the inference result of the second partial model from the second network device.

For example, the second network device sends the inference result of the second partial model to the terminal through a DC.

S460b: The terminal performs inference of the first partial model based on the inference result of the second partial model and the model inference information #1.

For example, if the inference result of the second partial model in S450b is the compressed second encoded data, the terminal may decompress the compressed second encoded data based on the intermediate data compression algorithm in the model inference information #1, to obtain the second encoded data. Next, the terminal decodes the second encoded data based on the intermediate data tensor shape and the intermediate data tensor structure in the model inference information #1, to obtain the output data of inference of the second partial model. Then, the terminal may use the output data of inference of the second partial model as an input of the first partial model based on the identifier of the first partial model in the model inference information #1, and perform inference of the first partial model, to obtain the output data of inference of the first partial model.

For example, if the inference result of the second partial model in S450b is the second encoded data, the terminal decodes the received inference result of the second partial model based on the intermediate data tensor shape and the intermediate data tensor structure in the model inference information #1, to obtain the output data of inference of the second partial model. Then, the terminal may use the output data of inference of the second partial model as an input of the first partial model based on the identifier of the first partial model in the model inference information #1, and perform inference of the first partial model, to obtain the output data of inference of the first partial model.

After obtaining the output data of inference of the second partial model, the second network device may send the output data of inference of the second partial model to another end of the session based on the type of the output data of inference in the model inference information #1. It may be understood that, if the target model is used for a voice-to-text service in a video call, the output data of inference of the first partial model is a text corresponding to voice information that is input to the second network device.

According to the model inference method provided in this application, inference negotiation may be performed between a network device and the terminal. To be specific, the first network device may determine work division of model inference of a session, that is, determine which part of model inference is responsible for by the terminal and which part of model inference is responsible for by the second network device. In this way, an inference task may be dynamically allocated between the terminal and the second network device by the first network device, to implement effective collaboration and on-demand model inference task allocation between the terminal and the second network device. Further, the method can avoid a problem that model inference effect is poor or a delay is long due to insufficient computing power of the terminal, and can also avoid a problem that a delay and a resource waste may be caused when the second network device independently performs model inference, thereby improving user experience.

The following describes a possible implementation of S410.

In some embodiments, S410 is specifically: The first network device determines the model inference information #1 of the terminal by using one or more of the following: inference capability information of the terminal, inference capability information of the second network device, information about the session, or a current connection bandwidth of the terminal.

Similarly, the model inference information #2 in S430 may also be determined based on the inference capability information of the terminal, the inference capability information of the second network device, the information about the session, and/or the current connection bandwidth of the terminal.

### 1. Inference capability information of the terminal, information about the session, and network bandwidth currently provided by the terminal

(1) Inference capability information of the terminal: indicating an inference capability of the terminal.

For example, the inference capability information of the terminal may include one or more of the following: available computing power for inference (available computing power for inference), inference precision, an AI/ML framework and a version number for inference, or a supported intermediate data compression algorithm of the terminal.
a. Available computing power for inference of the terminal: The available computing power for inference indicates available computing power or remaining computing power of the terminal for performing model inference. For example, the available computing power for inference of the terminal is determined by the terminal based on a configuration status of a computing resource (such as a software or hardware resource) of the terminal, or the available computing power for inference of the terminal is determined by the terminal based on an available or remaining computing resource of the terminal. The available or remaining computing resource of the terminal may be determined by the terminal based on the available or remaining computing resource of the terminal during session establishment or in a session establishment process (including initial session establishment and further including updated session establishment).

For example, the available computing power for inference of the terminal may be defined based on available power consumption limited by a graphics processing unit (graphics processing unit, GPU). In this example, a value of the available computing power for inference of the terminal may be a specific watt. For example, if the terminal is AR glasses, and available power consumption of the AR glasses is approximately 0.5 watts to 2 watts, for example, the available computing power for inference of the terminal may be defined as 0.5 watts. For example, if the terminal is an all-in-one VR machine, and available power consumption of the all-in-one VR machine is approximately 3 watts to 7 watts, for example, the available computing power for inference of the terminal may be defined as 3 watts.

For another example, the available computing power for inference of the terminal may alternatively be defined based on remaining available computing power of the GPU. In this example, a value of the available computing power for inference of the terminal may be a specific value of floating point operations per second (floating point operations per second, TFLOPS). For example, the terminal is AR glasses, and available computing power for inference of the AR glasses is 0.2 TFLOPS.
b. Inference precision: for example, INT8 or INT16.
d. AI/ML framework and version number for inference: for example, TensorRT v2.0.
e. Supported intermediate data compression algorithm: for example, FC_VCM.

(2) Information about the session: The information about the session includes a service type corresponding to the session. For example, the service type is automatic speech recognition (automatic speech recognition, ASR) 1 or ASR 2. A difference between the ASR 1 and the ASR 2 lies in that one is correspondingly that the terminal sends the inference result of the first partial model to the second network device after performing inference of the first partial model, and the other is correspondingly that the terminal performs inference of the first partial model based on the inference result of the second partial model from the second network device.

(3) Current connection bandwidth of the terminal: for example, 256 K.

In an implementation, before S410, the method may further include: The terminal sends the inference capability information of the terminal, the information about the session, and/or the current connection bandwidth of the terminal to the first network device.

In an example, when determining that the second network device has a model inference capability, the terminal sends the inference capability information of the terminal, the information about the session, and/or the current connection bandwidth of the terminal to the first network device. For example, the terminal receives capability indication information (for example, signaling sent by the first network device to the terminal in a registration process) from the first network device, where the capability indication information indicates that the second network device has the model inference capability. The capability indication information may include, for example, the inference capability information of the second network device, and the terminal determines, based on the inference capability information of the second network device, that the second network device has the model inference capability. Alternatively, the terminal considers by default that the second network device has the model inference capability.

For example, the terminal may send the inference capability information of the terminal to the first network device in a registration process, or the terminal may send the inference capability information of the terminal, the information about the session, and/or the current connection bandwidth of the terminal to the first network device in a call establishment process. For example, the terminal sends a registration request message or a session call message to the first network device, where the session call message may be a session call request message, or may be a session call response message. The registration request message may include the inference capability information of the terminal, and the session call message may include the inference capability information of the terminal, the information about the session, and/or the current connection bandwidth of the terminal. The information about the session, the current connection bandwidth of the terminal, and the inference capability information of the terminal may be carried in same signaling, or may be carried in different signaling.

It may be understood that an example in which the terminal sends the inference capability information of the terminal to the first network device is used above for description. A manner in which the first network device obtains the inference capability information of the terminal is not limited in this application. For example, the terminal may alternatively send, to the first network device, information used to determine the inference capability information of the terminal, and the first network device may determine the inference capability information of the terminal based on the information.

In addition, the information about the session may not be sent by the terminal, but is generated by the first network device based on application service logic and a session parameter. The application service logic is a service type used by an application, such as automatic speech recognition (automatic speech recognition, ASR). The session parameter is a parameter related to the current session, such as a video resolution.

### 2. Inference capability information of the second network device

The inference capability information of the second network device indicates an inference capability of the second network device.

In an implementation, before S410, the method may further include: The second network device sends the inference capability information of the second network device to the first network device.

For example, the inference capability information of the second network device may include one or more of the following: available computing power for inference, inference precision, an available cache for inference, an AI/ML framework and a version number for inference, or a supported intermediate data compression algorithm of the second network device. The parameters listed herein are similar to the parameters included in the foregoing inference capability information of the terminal. For details, refer to the foregoing descriptions of the parameters included in the inference capability information of the terminal. Details are not described herein again. It should be understood that the terminal and the second network device measure the available computing power for inference in a same measurement manner.

For example, the second network device may periodically send the inference capability information of the second network device to the first network device during normal running.

The following uses an example to describe how to determine the model inference information #1 and/or the model inference information #2 based on the inference capability information of the terminal, the inference capability information of the second network device, the information about the session, and/or the current connection bandwidth of the terminal.

In a possible manner, the first network device may determine the first partial model and the second partial model based on the inference capability information of the terminal, the inference capability information of the second network device, and the information about the session. It may be understood that determining the first partial model is equivalent to determining the identifier of the first partial model and the quantity of parameters of the first partial model, and determining the second partial model is equivalent to determining the identifier of the second partial model and the quantity of parameters of the second partial model. The following provides descriptions with reference to Example 1 and Example 2.

### Example 1

The first network device determines whether the AI/ML framework and the version number for inference in the inference capability information of the terminal are the same as or compatible with the AI/ML framework and the version number for inference in the inference capability information of the second network device; and if yes, may determine inference precision corresponding to a model corresponding to a service type corresponding to the session, that is, inference precision corresponding to the target model. If the inference precision in the inference capability information of the terminal is the same as the inference precision in the inference capability information of the second network device, the inference precision corresponding to the target model is the inference precision in the inference capability information of the terminal or the inference precision in the inference capability information of the second network device. If the inference precision in the inference capability information of the terminal is different from the inference precision in the inference capability information of the second network device, the inference precision corresponding to the target model is a lower one of the inference precision in the inference capability information of the terminal and the inference precision in the inference capability information of the second network device. Then, the first network device may determine inference computing power of the session based on the information about the session (specifically, based on the model corresponding to the service type corresponding to the session, that is, the target model) and the inference precision corresponding to the target model. If the inference computing power of the session exceeds the available computing power for inference of the terminal, it is determined whether excess inference computing power exceeds the available computing power for inference of the second network device. If the excess inference computing power does not exceed the available computing power for inference of the second network device, the target model may be split into the first partial model and the second partial model according to a principle of fully utilizing the available computing power for inference of the terminal. In this solution, the available computing power for inference of the terminal can be fully utilized, so that a service delay can be reduced as much as possible.

For example, if the inference computing power of the session is 2 watts, and the available computing power for inference of the terminal is 0.5 watts, the foregoing excess inference computing power is 1.5 watts. The available computing power for inference of the second network device is 10 watts, which is greater than 1.5 watts, so that the target model can be split into the first partial model and the second partial model according to the principle of fully utilizing the available computing power for inference of the terminal. For example, as shown in Table 1, the second network device stores a plurality of solutions of splitting the target model. In each solution, the target model may be split into two sub-models (denoted as a sub-model A and a sub-model B), and the two partial models corresponding to each splitting solution correspond to specific inference computing power. It may be determined according to Table 1 that, if the target model is split into the first partial model and the second partial model according to the principle of fully utilizing the available computing power for inference of the terminal, the first partial model is a sub-model 1, and the second partial model is a sub-model 2.

**Table 1**

| Splitting solution | Inference computing power corresponding to the sub-model A (unit: watt) | Inference computing power corresponding to the sub-model B (unit: watt) |
|---|---|---|
| Solution A (the sub-model A is the sub-model 1, and the sub-model B is the sub-model 2) | 0.4 | 1.6 |
| Solution B (the sub-model A is a sub-model 3, and the sub-model B is a sub-model 4) | 0.3 | 1.7 |
| Solution C (the sub-model A is a sub-model 5, and the sub-model B is a sub-model 6) | 0.1 | 1.9 |

### Example 2

The first network device may determine inference computing power of the session according to the method described in Example 1. If the inference computing power of the session exceeds the available computing power for inference of the second network device, it is determined whether excess inference computing power exceeds the available computing power for inference of the terminal. If the excess inference computing power does not exceed the available computing power for inference of the terminal, the target model may be split into the first partial model and the second partial model according to a principle of fully utilizing the available computing power for inference of the second network device. In this solution, the available computing power for inference of the second network device is fully utilized, so that power consumption of the terminal can be reduced, or computing resources of the terminal can be reduced. Therefore, the terminal can perform other processing in parallel.

For example, if the inference computing power of the session is 2 watts, and the available computing power for inference of the second network device is 1.8 watts, the foregoing excess inference computing power is 0.2 watts. The available computing power for inference of the terminal is 0.5 watts, which is greater than 0.2 watts, so that the target model can be split into the first partial model and the second partial model according to the principle of fully utilizing the available computing power for inference of the second network device. For example, Table 1 is still used as an example. In this case, the first partial model is the sub-model 3, and the second partial model is the sub-model 4.

For example, in this embodiment of this application, the inference computing power of the session may be power consumption or equivalent TFLOPS of inference of the session, for example, may be estimated based on target model matching baseline data. For example, the power consumption or equivalent TFLOPS of inference of the session may be tested by using a GPU test tool as a benchmark, a unified input is used for the test, including settings of a resolution, an algorithm, an AI framework, and the like, and power consumption or equivalent TFLOPS of performing inference on each AI/ML service by different chips is tested and is used as benchmark data.

In a possible manner, the first network device may determine the type of the output data of inference based on the information about the session, which may be specifically the service type corresponding to the session in the information about the session.

For example, if the service type is the foregoing ASR 1, the type of the output data of inference in the model inference information #1 is intermediate data, and the type of the output data of inference in the model inference information #2 is a text. If the service type is the foregoing ASR 2, the type of the output data of inference in the model inference information #1 is a text, and the type of the output data of inference in the model inference information #2 is intermediate data.

In a possible manner, when the output data of inference of the first partial model is intermediate data, the first network device may determine the intermediate data tensor shapes and the intermediate data tensor structures in the model inference information #1 and the model inference information #2 based on the first partial model. The intermediate data tensor shapes and the intermediate data tensor structures in the model inference information #1 and the model inference information #2 are the same.

When the output data of inference of the second partial model is intermediate data, the first network device may determine the intermediate data tensor shapes and the intermediate data tensor structures in the model inference information #1 and the model inference information #2 based on the second partial model. The intermediate data tensor shapes and the intermediate data tensor structures in the model inference information #1 and the model inference information #2 are the same.

A person skilled in the art may understand that output data of a model has a corresponding tensor shape and tensor structure, and determining a model is equivalent to determining a tensor shape and a tensor structure of output data of the model.

In a possible manner, the first network device may determine the intermediate data compression algorithms in the model inference information #1 and the model inference information #2 based on the connection bandwidth of the terminal.

For example, if the connection bandwidth of the terminal is capable of transmitting the first encoded data or the second encoded data described above, it is determined not to compress the intermediate data, or if not, it is determined to compress the intermediate data. When it is determined to compress the intermediate data, a specific compression algorithm may be determined with reference to a data amount of the first encoded data or a data amount of the second encoded data, and the connection bandwidth of the terminal. The data amount of the first encoded data may be estimated based on the first partial model, and the data amount of the second encoded data may be estimated based on the second partial model.

It should be understood that the foregoing enumerated solutions for determining the model inference information #1 and/or the model inference information #2 are merely examples for description, and should not constitute any limitation on this application.

For ease of understanding, the following describes possible procedures applicable to embodiments of this application. For terms or concepts that appear in the following and that are the same as those in the foregoing, refer to descriptions of corresponding terms or concepts in the foregoing. Details are not described in the following again. It may be understood that an example in which inference negotiation is performed in a session call is mainly used below for description. UE #1 below is the terminal described above, and it is assumed that UE #2 is another end of the session.

FIG. 5 is a schematic flowchart of a model inference method 500 according to an embodiment of this application. The method 500 may be used to implement the solution of the foregoing method 400. In the method 500, it is assumed that a first network device and a second network device are the same, that is, the network device in FIG. 5; or the network device in FIG. 5 is a system including the first network device and the second network device. The following describes steps in the method 500.

S501: UE #1 sends inference capability information of the UE #1 to the network device.

The UE #1 reports the inference capability information of the UE #1 to the network device, so that in a subsequent session establishment process, the network device may perform inference negotiation between the UE #1 and the network device based on the inference capability information of the UE #1. For a parameter included in the inference capability information of the UE #1, refer to the foregoing related descriptions. Details are not described herein again.

S502: The network device stores the inference capability information of the UE #1.

Optionally, the method 500 further includes S503 and S504.

S503: The network device sends inference capability information of the network device to the UE #1. For details about the inference capability information of the network device, refer to the foregoing related descriptions. Details are not described herein again.

S504: The UE #1 determines, based on the inference capability information of the network device, that the network device has a model inference capability.

S503 and S504 are optional steps. To be specific, the network device may not need to provide the inference capability information of the network device for the UE #1, and the UE #1 may consider by default that the network device has the model inference capability.

The following describes an inference negotiation process with reference to four scenarios.

Scenario 1: The UE #1 initiates an initial session call.

S505: The UE #1 sends a session call request to the network device.

It should be noted that the inference capability information of the UE #1 that is reported by the UE #1 in S501 may alternatively be sent in S505. In other words, the method 500 may not include S501 and S502, and in S502, the session call request includes the inference capability information of the UE #1. For example, in a possible case, the method 500 does not include S501 and S502 but includes S503 and S504, and after S504, S505 may be performed, that is, the UE #1 reports the inference capability information of the UE #1 to the network device only after determining, based on the inference capability information of the network device, that the network device has the model inference capability. In another possible case, the method 500 does not include S501 to S504, that is, the UE #1 considers by default that the network device has the model inference capability, and reports the inference capability information of the UE #1 to the network device.

Optionally, the session call request may further include information about a session and/or a current connection bandwidth of the UE #1.

S506: The network device determines model inference information #1 based on the session call request.

For example, the network device may determine the model inference information #1 based on one or more of the following: the inference capability information of the network device, the inference capability information of the UE #1, the information about the session, and the current connection bandwidth of the UE #1. For the model inference information #1 and how the network device determines the model inference information #1, refer to the foregoing related descriptions.

It should be noted that the information about the session may be carried in the session call request, or may be determined by the network device. For example, the network device may determine the information about the session based on application service logic and a session parameter.

S507: The network device sends a session call response to the UE #1, where the session call response carries an inference negotiation result of the session, that is, the model inference information #1.

Scenario 2: The UE #1 receives an initial session call.

S508: The network device sends a session call request to the UE #1.

Optionally, the session call request is used to request the inference capability information of the UE #1. The session call request is further used to request information about a session and/or a current connection bandwidth of the UE #1.

S509: The UE #1 sends a session call response to the network device.

If the session call request in S508 is used to request the inference capability information of the UE #1, the session call response in S509 carries the inference capability information of the UE #1. If the session call request in S508 is further used to request the information about the session and/or the current connection bandwidth of the UE #1, the session call response in S509 carries the information about the session and/or the current connection bandwidth of the UE #1.

It may be understood that the inference capability information of the UE #1 that is reported by the UE #1 in S501 may alternatively be sent in S509. In other words, the method 500 may not include S501, and in S509, the session call response includes the inference capability information of the UE #1.

S510: The network device determines model inference information #1 based on the session call response.

For example, the network device may determine the model inference information #1 based on one or more of the following: the inference capability information of the network device, the inference capability information of the UE #1, the information about the session, and the current connection bandwidth of the UE #1. For how the network device determines the model inference information #1, refer to the foregoing related descriptions.

It should be noted that the information about the session may be carried in the session call response, or may be determined by the network device. For example, the network device may determine the information about the session based on application service logic and a session parameter.

S511: The network device sends, to the UE #1, the model inference information #1.

Scenario 3: The UE #1 initiates a session update call.

S512: The UE #1 sends a session update call request to the network device.

S513: The network device re-determines model inference information #1 based on the session update call request. It should be understood that the model inference information #1 herein may be different from model inference information #1 that is determined before a session is updated.

For example, the session update call request may include updated inference capability information of the UE #1, updated information about the session, or an updated current connection bandwidth of the UE #1.

In this embodiment of this application, if work of a model inference task needs to be re-divided because a processing requirement of the session changes, in step S513, for example, the network device may re-determine the model inference information #1 based on the updated inference capability information of the UE #1, the updated information about the session, and the updated current connection bandwidth of the UE #1.

S514: The network device sends the re-determined model inference information #1 to the UE #1.

S512 to S514 are similar to S505 to S507, and details are not described herein again.

Scenario 4: The UE #1 receives a session update call.

S515: The network device sends a session update call request to the UE #1.

S516: The UE #1 sends a session update call response to the network device.

S517: The network device re-determines model inference information #1 based on the session update call response. It should be understood that the model inference information #1 herein may be different from model inference information #1 that is determined before a session is updated.

For example, the session update call response may include updated inference capability information of the UE #1, updated information about the session, and/or an updated current connection bandwidth of the UE #1, to re-determine the model inference information #1.

In this embodiment of this application, if work of a model inference task needs to be re-divided because a processing requirement of the session changes, in step S517, for example, the network device may re-determine the model inference information #1 based on the updated inference capability information of the UE #1, the updated information about the session, and the updated current connection bandwidth of the UE #1.

S518: The network device sends the re-determined model inference information #1 to the UE #1.

S515 to S518 are similar to S508 to S511, and details are not described herein again.

The foregoing provides example descriptions with reference to the four scenarios. Regardless of the foregoing scenarios, after the model inference information #1 is determined, steps S519 to S522 or S523 to S526 below may be included.

S519: The UE #1 performs inference of a first partial model based on the model inference information #1.

S520: The UE #1 sends an inference result of the first partial model to the network device.

S521: The network device performs inference of a second partial model based on the inference result of the first partial model, to obtain an inference result of the second partial model.

It should be understood that S519 to S521 are the same as S440a to S460a in the method 400. For details, refer to S440a to S460a.

S522: The network device sends, to UE #2, output data of inference of the second partial model that is obtained in S521.

S523: The UE #2 sends media data to the network device. For example, the media data may be an audio or voice information. For example, if a target model is used for a voice-to-text service, the media data is voice information.

S524: The network device performs inference of the second partial model on the media data.

S525: The network device sends an inference result of the second partial model to the UE #1.

S526: The UE #1 performs inference of the first partial model based on the inference result of the second partial model and the model inference information #1, to obtain output data of inference of the first partial model.

It should be understood that S524 to S526 are the same as S440b to S460b in the method 400. For details, refer to S440b to S460b.

Based on the foregoing technical solution, a terminal reports inference capability information of the terminal to a network device, and the network device may also notify the terminal of inference capability information of the network device, that is, the terminal and the network device may exchange the respective inference capability information. By using a session call request, the terminal and the network device may perform inference negotiation. After the negotiation is completed, the terminal and the network device perform model inference that they are respectively responsible for. In addition, if the terminal or the network device initiates a session update request, the terminal and the network device may perform inference negotiation again.

It may be understood that, in the solution shown in FIG. 5, how to divide work of model inference is determined by the network device (for example, S506 or S510). In a possible solution, how to divide work of model inference may alternatively be determined by the terminal. For example, the UE #1 may determine, based on the inference capability information of the UE #1 and the inference capability information of the network device, model inference performed by the network device and a parameter required for the model inference, and notify the network device of model inference performed by the network device and the parameter required for the model inference.

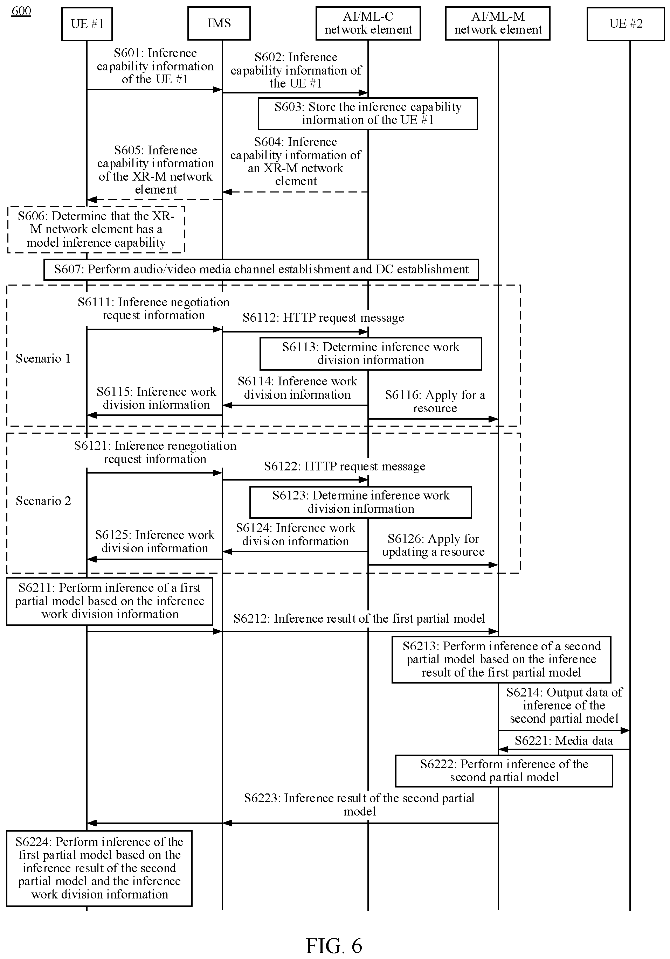

FIG. 6 is a schematic flowchart of a model inference method 600 according to an embodiment of this application. The method 600 may be used to implement the solution of the foregoing method 400. In the method 600, inference negotiation between a terminal and a network may be completed based on a DC, and inference negotiation may be performed, for example, after the DC is established. In the method 600, a first network device is an AI/ML-C network element, a second network device is an AI/ML-M network element, and an IMS includes one or more network elements. For example, refer to the architecture shown in FIG. 1. "IMS" is used for unified representation below. In an example, the method 600 shown in FIG. 6 may be used in the architecture in FIG. 1. The following describes steps in the method 600.

S601: UE #1 sends inference capability information of the UE #1 to an IMS.

In a possible implementation, in a process of registering with the IMS, the UE #1 sends the inference capability information of the UE #1 to the IMS. For example, the UE #1 sends a SIP registration (REGISTER) message to the IMS, where the SIP REGISTER message carries the inference capability information of the UE #1. For example, the inference capability information of the UE #1 may be carried in a header field of SIP signaling (for example, the SIP REGISTER message).

In an example, a form of the inference capability information of the UE #1 is as follows:
AI-Capability: AI-Inference=1.2TFlops; AI-Precision=INT16; Cache=1G; AI-Framework=WebNN v1.2; Intermediate-compression=FC_VCM

"AI-Inference" indicates available computing power for inference of the UE #1, and is 1.2 TFLOPS in this example. "AI-Precision" indicates inference precision of the UE #1, and is INT16 in this example. "Cache" indicates an available cache for inference of the UE #1, and is 1 G in this example. "AI-Framework" indicates an AI/ML framework and a version number for inference of the UE #1, and is WebNN v1.2 in this example. Generally, for a native application or an installed application, inference is performed based on a built-in AI framework of the terminal; and for a DC application, inference is performed based on WebNN. "Intermediate-compression" indicates an intermediate data compression algorithm supported by the UE #1, and is FC_VCM in this example.

S602: The IMS sends the inference capability information of the UE #1 to an AI/ML-C network element.

For example, after successfully performing registration authentication on the UE #1, the IMS forwards the inference capability information of the UE #1 to the AI/ML-C network element. In an example, the IMS sends an HTTP message to the AI/ML-C network element, where the HTTP message carries the inference capability information of the UE #1.

S603: The AI/ML-C network element stores the inference capability information of the UE #1.

Optionally, the method 600 further includes S604 to S606.

S604: The AI/ML-C network element sends inference capability information of an AI/ML-M network element to the IMS.

In a possible implementation, the AI/ML-C network element sends an HTTP response message (for example, a 200 message) to the IMS, where the HTTP response message includes the inference capability information of the AI/ML-M network element.

How the AI/ML-C network element obtains the inference capability information of the AI/ML-M network element is not limited in this application. For example, the inference capability information of the AI/ML-M network element may be sent by the AI/ML-M network element to the AI/ML-C network element, or may be pre-configured on the AI/ML-C network element.

S605: The IMS sends the inference capability information of the AI/ML-M network element to the UE #1.

S606: The UE #1 determines that the AI/ML-M network element has a model inference capability.

Steps S604 to S606 are optional steps. Specifically, if S604 to S606 are performed, the UE #1 may learn, based on the inference capability information of the AI/ML-M network element, whether the AI/ML-M network element has the model inference capability. If S604 to S606 are not performed, the UE #1 may consider by default that the AI/ML-M network element has the model inference capability.

S607: Perform audio/video media channel establishment and DC establishment.

When initiating a session or receiving a session, the UE #1 may first establish an audio/video media channel with the IMS, and establish a DC between the UE #1 and the IMS. The DC between the UE #1 and the IMS may be used to transmit signaling or data between the UE #1 and the IMS, for example, related information of interaction of work division of inference. It may be understood that signaling exchanged between the UE #1 and the IMS below may be transmitted through the DC.

The following describes an inference negotiation process with reference to two scenarios.

Scenario 1: The UE #1 initiates inference negotiation.

S6111: The UE #1 sends inference negotiation request information to the IMS, where the inference negotiation request information is used to perform inference negotiation with the AI/ML-C network element.

Optionally, the inference negotiation request information may include the inference capability information of the UE #1.

For example, the inference capability information of the UE #1 that is reported by the UE #1 in S601 may alternatively be sent in S6111. In other words, the method 600 may not include S601 and S602, and the inference capability information of the UE #1 is sent by using the inference negotiation request information. If the inference capability information of the UE #1 is reported in S601, the inference capability information of the UE #1 may not be reported in S6111, or the inference capability information of the UE #1 may be reported again in S6111.

Optionally, the inference negotiation request information may further include information about the session and/or a current connection bandwidth of the UE #1.

In a possible case, the UE #1 considers by default that the AI/ML-M network element has the model inference capability. Therefore, the UE #1 includes the information about the session and/or the current connection bandwidth of the UE #1 in the inference negotiation request information.

In another possible case, the UE #1 determines, based on the inference capability information of the AI/ML-M network element that is received in S603, whether the AI/ML-M network element has the model inference capability. If the UE #1 determines that the AI/ML-M network element has the model inference capability, the UE #1 includes the information about the session and/or the current connection bandwidth of the UE #1 in the inference negotiation request information. If the UE #1 determines that the AI/ML-M network element does not have the model inference capability, the UE #1 does not include the information about the session and/or the current connection bandwidth of the UE #1 in the inference negotiation request information. For a case in which the AI/ML-M network element does not have the model inference capability, in an example, the UE #1 may perform model inference. This embodiment of this application mainly describes a case in which the AI/ML-M network element has the model inference capability.

In an example, a form of the inference negotiation request information is as follows:
AI-Negotiation-Request: AI-Inference =1.2TFlops; AI-Precision=INT16; Cache=1G; AI-Framework=WebNN v1.2; AI-Model-Type=NLP; Bandwidth=256K; Intermediate-compression=FC_VCM

For parameters other than "Bandwidth" and "AI-Model-Type" in the foregoing parameters, refer to the descriptions in S601.

"AI-Model-Type" is the information about the session, and indicates a model type herein. In this example, the model type is NLP, and NLP indicates a model of a natural language processing service. "Bandwidth" indicates the current connection bandwidth of the UE #1, and is 256 K in this example, indicating that the current connection bandwidth of the UE #1 is 256 KB.

S6112: The IMS sends an HTTP request message to the AI/ML-C network element.

After receiving the inference negotiation request information of the UE #1, the IMS may convert the inference negotiation request information into the HTTP request message and send the HTTP request message to the AI/ML-C network element. The HTTP request message may include a parameter carried in the inference negotiation request information in S6111. For example, the HTTP request message may include the inference capability information of the UE #1, and may further include the information about the session and/or the current connection bandwidth of the UE #1.

S6113: The AI/ML-C network element determines inference work division information based on the inference negotiation request information.

For example, the AI/ML-C network element may determine the inference work division information based on one or more of the following: the inference capability information of the AI/ML-M network element, the inference capability information of the UE #1, the information about the session, and the current connection bandwidth of the UE #1.

It should be understood that model inference information #1 is a case of the inference work division information. In other words, if the AI/ML-C network element determines that the UE #1 performs inference of a first partial model, the inference work division information is the model inference information #1. For the inference work division information and how to determine the inference work division information, refer to the foregoing related descriptions of the model inference information #1.

It should be noted that the information about the session may be carried in the HTTP request message, or may be determined by the AI/ML-C network element. For example, the AI/ML-C network element may determine the information about the session based on application service logic and a session parameter.

S6114: The AI/ML-C network element sends the inference work division information to the IMS.

In a possible implementation, the AI/ML-C network element sends an HTTP response message to the IMS, where the HTTP response message carries an inference negotiation result of a current session, that is, the inference work division information.

In an example, a form of the inference work division information is as follows:
AI-Negotiation-Response: Result=success; AI-Model-Identifier=model_xxx; AI-Model-Param=11M; Output-Data-Type=intermediate; Output-Tensor-Shape=[1,64,64]; Output-Tensor-Structure=Pytorch2.0; Intermediate-Compression=FC_VCM

"Result" indicates a negotiation result. In this example, this field is "success", indicating that negotiation succeeds, to be specific, the UE #1 and the AI/ML-M network element are respectively responsible for inference of partial models. It should be understood that this field may alternatively be "failure", indicating that negotiation fails, to be specific, the AI/ML-M network element is not allowed to perform inference of a partial model, and the UE #1 performs inference of an entire model.

"AI-Model-Identifier" indicates an identifier of a model for which the terminal is responsible for inference. If the AI/ML-C network element determines that the AI/ML-M network element performs inference of an entire model, that is, does not divide work of a model inference task or does not split a target model, the inference work division information may not carry this field. It should be understood that, in an example, a value of this field is an identifier of the first partial model.

"AI-Model-Param" indicates a quantity of parameters of the model identified by "AI-Model-Identifier". In this example, this field is 11 M, and M indicates millions. If the AI/ML-C network element determines that the AI/ML-M network element performs inference of an entire model, the inference work division information may not carry this field. It should be understood that, in an example, a value of this field is a quantity of parameters of the first partial model.

"Output-Data-Type" indicates a type of output data of inference. If split inference is performed, that is, the AI/ML-M network element determines that the UE #1 and the AI/ML-M network element are respectively responsible for inference of partial models, this field is intermediate, indicating that the type of the output data of inference is intermediate data. For example, if the AI/ML-M network element determines that the UE #1 is responsible for inference of an entire model, Output-Data-Type=result. If the AI/ML-M network element determines that the AI/ML-M network element is responsible for inference of an entire model, Output-Data-Type=media.

"Output-Tensor-Shape" indicates an intermediate data tensor shape. In this example, this field is [1,64,64], indicating a three-dimensional tensor. A first dimension has one element, a second dimension has 64 elements, and a third dimension has 64 elements. In addition, if no split inference is performed, this field may not be carried.

"Output-Tensor-Structure" indicates an intermediate data tensor structure. In this example, this field is Pytorch2.0.

"Intermediate-Compression" indicates an intermediate data compression algorithm, and a value may be VC_FCM, None, or the like. In this example, the value is FC_VCM. If Intermediate-Compression=None, it indicates no compression. In addition, if no split inference is performed, this field may not be carried. In an example, if "Intermediate-Compression" is not carried, it indicates no compression.

S6115: The IMS sends the inference work division information to the UE #1.

After receiving the inference work division information sent by the AI/ML-C network element, the IMS forwards the inference work division information to the UE #1.

In a possible implementation, the IMS sends an inference negotiation response to the UE #1, where the inference negotiation response carries the inference work division information, or the inference work division information is the inference negotiation response.

S6116: The AI/ML-C network element applies to the AI/ML-M network element for a resource.

When the AI/ML-C determines that the AI/ML-M network element performs model inference, for example, when the inference work division information is the model inference information #1, the AI/ML-C may apply to the AI/ML-M network element for the resource, that is, request the AI/ML-M network element to perform inference of a second partial model. In a possible implementation, the AI/ML-C network element sends an HTTP request message to the AI/ML-M network element, where the HTTP request message is used to apply to the AI/ML-M network element for the resource related to performing inference of the second partial model. In an example, the HTTP request message may be the resource request message described above, or the resource request message described above may be the HTTP request message. In an example, the HTTP request message may include model inference information #2.

For example, that the AI/ML-C network element applies to the AI/ML-M for the resource includes: The AI/ML-C network element requests the AI/ML-M network element to create or allocate an endpoint resource. Correspondingly, the AI/ML-M network element creates or allocates a corresponding resource endpoint (which is also referred to as a media endpoint), and returns information about the corresponding resource endpoint to the AI/ML-C network element. For example, after receiving the HTTP request, the AI/ML-M network element creates or allocates two resource endpoints: a first resource endpoint and a second resource endpoint. An attribute of the first resource endpoint includes a local connection address of the first resource endpoint, and an attribute of the second resource endpoint includes a local connection address of the second resource endpoint. The local connection address of the first resource endpoint and the local connection address of the second resource endpoint are respectively used to cause the UE #1 to establish a communication connection to the AI/ML-M network element and cause UE #2 to establish a communication connection to the AI/ML-M network element.

For example, that the AI/ML-C network element applies to the AI/ML-M for the resource may alternatively include: The AI/ML-C network element requests the AI/ML-M network element to reserve or allocate a computing power resource. Correspondingly, the AI/ML-M network element reserves or allocates the corresponding computing power resource, for example, a memory or a CPU slot. For example, the AI/ML-C network element sends an inference computing power requirement to the AI/ML-M network element, where the inference computing power requirement indicates computing power consumed by inference of a model (for example, inference of the second partial model) that the AI/ML-M network element is responsible for. In this way, the AI/ML-M network element may reserve or allocate the corresponding computing power resource based on the inference computing power requirement.

Optionally, a resource application result returned by the AI/ML-M network element to the AI/ML-C network element may include result indication information and/or resource endpoint information. The result indication information may notify the AI/ML-C network element whether the AI/ML-M network element is to perform inference of the model (for example, the second partial model) for which the AI/ML-M network element is responsible for inference. For example, the resource endpoint information includes the local connection address of the first resource endpoint and the local connection address of the second resource endpoint.

In a possible case, if the resource endpoint information returned by the AI/ML-M network element to the AI/ML-C network element includes the local connection address of the first resource endpoint, the AI/ML-C network element may send the local connection address of the first resource endpoint to the UE #1, so that the UE #1 communicates with the AI/ML-M network element by using the local connection address of the first resource endpoint. For example, the UE #1 sends, to the AI/ML-M network element, an inference result obtained after the UE #1 performs model inference. For example, the resource endpoint information and the inference work division information that are sent to the UE #1 may be carried in one piece of signaling or one message, or may be carried in different signaling or messages. This is not limited. In addition, if the resource endpoint information returned by the AI/ML-M network element to the AI/ML-C network element includes the local connection address of the second resource endpoint, the AI/ML-C network element may further send the local connection address of the second resource endpoint to the UE #2, so that the UE #2 communicates with the AI/ML-M network element by using the local connection address of the second resource endpoint. For example, the UE #2 obtains, from the AI/ML-M network element, output data of inference that is obtained after the AI/ML-M network element performs model inference. The AI/ML-C network element may directly send the local connection address of the second resource endpoint to the UE #2, or may send the local connection address of the second resource endpoint to the UE #2 via a network device to which the UE #2 belongs. This is not limited.

It may be understood that a sequence of performing S6114 and S6116 is not limited.

For example, S6114 is performed before S6116. In other words, after determining the inference work division information, the AI/ML-C network element directly sends the inference work division information to the UE #1 via the IMS. In this case, the local connection address and the inference work division information may be carried in different signaling. In other words, the AI/ML-C network element first sends the inference work division information to the UE #1 via the IMS, and then sends the local connection address to the UE #1 via the IMS after receiving the local connection address from the AI/ML-M network element.

For another example, S6116 is performed before S6114. In other words, after determining the inference work division information, the AI/ML-C network element may first apply to the AI/ML-M network element for the resource, and then send the inference work division information to the UE #1 via the IMS. In this case, after receiving the local connection address from the AI/ML-M network element, the AI/ML-C network element sends the inference work division information and the local connection address to the UE #1 via the IMS. In an example, the local connection address and the inference work division information may be carried in one piece of signaling.

Scenario 2: The UE #1 initiates inference renegotiation.

S6121: The UE #1 sends inference renegotiation request information to the IMS.

In some cases, for example, in a session process, when an inference requirement of an inference service changes and/or available computing power for inference of the terminal changes, the terminal may initiate inference renegotiation. In these cases, the UE #1 may send the inference renegotiation request information to the IMS, to perform inference negotiation again. For example, the inference renegotiation request information may include the inference capability information of the UE #1 and a current connection bandwidth of the UE #1, and may further include information about the session.

S6122: The IMS sends an HTTP message to the AI/ML-C network element.

The HTTP message may include a parameter in the inference renegotiation request information.

S6123: The AI/ML-C network element determines inference work division information based on the HTTP message.

In this embodiment of this application, for example, because work of a model inference task needs to be re-divided due to the change in the inference requirement and/or the change in the available computing power for inference of the terminal, the AI/ML-C network element may determine new inference work division information based on updated related information of the UE #1, for example, updated inference capability information of the UE #1, in S6123.

S6124: The AI/ML-C network element sends the inference work division information to the IMS.

S6125: The IMS sends the inference work division information to the UE #1.

It should be understood that S6121 to S6125 are similar to S6111 to S6115. For details, refer to S6111 to S6115. Details are not described herein again.

S6126: The AI/ML-C network element applies to the AI/ML-M network element for updating an inference resource.

When determining, based on the inference work division information, that inference is updated on an AI/ML-M network element side, the AI/ML-C network element may apply to the AI/ML-M network element for updating a rendering resource, that is, request the AI/ML-M network element to perform inference on a model for which the AI/ML-M network element is responsible for inference after work update. In a possible implementation, the AI/ML-C network element sends an HTTP message to the AI/ML-M network element, where the HTTP message is used to apply for resource modification. For details, refer to the descriptions of S6116. Details are not described herein. It may be understood that, in this step, the AI/ML-M network element may re-create an endpoint resource, or may reuse the endpoint resource created or allocated in S6116. The AI/ML-M network element may reuse the computing power resource reserved or allocated in S6116, or may reallocate a computing power resource, where the reallocated computing power resource may be different from the computing power resource reserved or allocated in S6116.

The foregoing provides example descriptions with reference to the two scenarios. Regardless of the foregoing scenarios, after the inference work division information is determined, steps S6211 to S6214 or S6221 to S6224 below may be included. It should be noted that, in the following, it is assumed that the inference work division information indicates the UE #1 to perform inference of the first partial model, and inference of the second partial model is simultaneously performed by the AI/ML-M network element.

S6211: The UE #1 performs inference of the first partial model based on the inference work division information.

For this step, refer to S440a. Details are not described herein again.

S6212: The UE #1 sends an inference result of the first partial model to the AI/ML-M network element.

In a possible implementation, the UE #1 sends the inference result of the first partial model to the IMS (for example, a DCS-M) through an application DC, and the IMS forwards the inference result of the first partial model to the AI/ML-M network element.

S6213: The AI/ML-M network element performs inference of the second partial model based on the inference result of the first partial model, to obtain output data of inference of the second partial model.

Steps S6211 to S6213 are similar to S440a to S460a in the method 400. For details, refer to S440a to S460a.

S6214: The AI/ML-M network element sends the output data of inference of the second partial model to the UE #2.

S6221: The AI/ML-M network element receives media data from the UE #2. For example, if the target model is used for a voice-to-text service, the media data is voice information.

S6222: The AI/ML-M network element performs inference of the second partial model on the media data.

S6223: The AI/ML-M network element sends an inference result of the second partial model to the UE #1.

In a possible implementation, the AI/ML-M network element sends the inference result of the second partial model to the IMS through an application DC, and the IMS forwards the inference result of the second partial model to the UE #1.

S6224: The UE #1 performs inference of the first partial model based on the inference result of the second partial model and the inference work division information.

Steps S6221 to S6224 are similar to S440b to S470b in the method 400. For details, refer to S440b to S470b.

Based on the foregoing technical solution, in a process of registering with the IMS, the terminal may report inference capability information of the terminal to the AI/ML-C network element, and the AI/ML-C network element may also notify the terminal of the inference capability information of the AI/ML-M network element. When determining that the AI/ML-M network element has the model inference capability, the terminal may include capability information of the terminal, information about a session, and/or a current connection bandwidth of the terminal in a DC establishment request, to request to perform inference negotiation. The AI/ML-C network element may determine the inference work division information based on the capability information of the terminal, the information about the session, the current connection bandwidth of the terminal, and/or the like. For example, the AI/ML-C network element may obtain a computing power requirement of an inference task through calculation, and determine whether the available computing power for inference of the terminal is exceeded. If the available computing power for inference of the terminal is exceeded, the AI/ML-C network element may further determine inference work division of the session with reference to the inference capability information of the AI/ML-M network element, and notify the terminal of an inference negotiation result. When the AI/ML-M network element participates in model inference, the AI/ML-C network element applies to the AI/ML-M network element for an inference resource, so that the AI/ML-M network element can perform model inference. Then, the terminal and the AI/ML-M network element perform model inference that they are respectively responsible for. In addition, if work of an inference task may need to be re-divided due to some cases in a session process, for example, a change in an inference requirement, the terminal may re-initiate inference negotiation, and perform inference negotiation again based on an updated inference requirement.

It may be understood that, in the solution shown in FIG. 6, how to divide work is determined by the AI/ML-C network element (for example, S6113 and 6123). In a possible solution, how to divide work may alternatively be determined by the terminal. For example, the UE #1 may determine the inference work division information based on the inference capability information of the UE #1, the information about the session, and the current connection bandwidth of the UE #1. Optionally, before S6211 or S6221 is performed, the UE #1 may further send the inference work division information to the AI/ML-C network element.

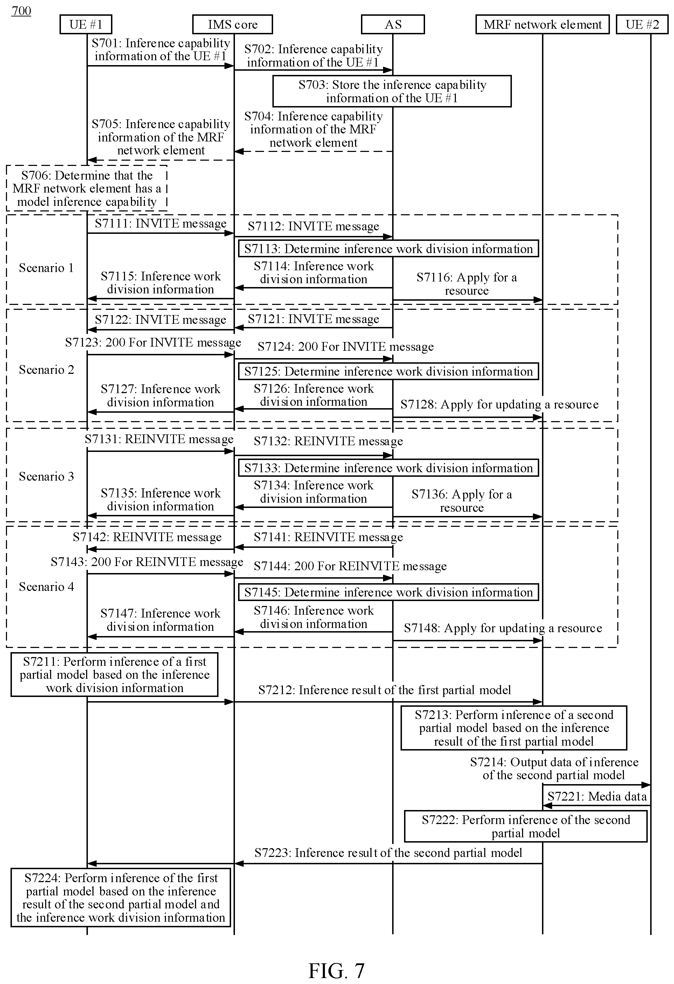

FIG. 7 is a schematic flowchart of a model inference method 700 according to an embodiment of this application. The method 700 may be used to implement the solution of the foregoing method 400. In the method 700, inference negotiation between a terminal and a network may be completed based on IMS SIP signaling. Inference negotiation may be completed, for example, in a call establishment process. In the method 700, a first network device is an AS, a second network device is an MRF network element, the MRF network element may include, for example, an MRFC and an MRFP, and an IMS core includes one or more network elements. For example, refer to the architecture shown in FIG. 2. "IMS core" is used for unified representation below. In an example, the method 700 shown in FIG. 7 may be used in the architecture in FIG. 2. The following describes steps in the method 700.

S701: UE #1 sends inference capability information of the UE #1 to an IMS core network (IMS core).

This step is similar to S601. Refer to S601. Details are not described herein again.

S702: The IMS core sends the inference capability information of the UE #1 to an AS.

For example, after successfully performing registration authentication on the UE #1, the IMS core forwards the inference capability information of the UE #1 to the AS. In an example, the IMS core sends a SIP REGISTER message to the AS, where the SIP REGISTER message carries the inference capability information of the UE #1.

S703: The AS stores the inference capability information of the UE #1.

Optionally, the method 700 further includes S704 to S706.

S704: The AS sends inference capability information of an MRF network element to the IMS core.

How the AS obtains the inference capability information of the MRF network element is not limited in this application. For example, the inference capability information of the MRF network element may be sent by the MRF network element to the AS, or may be pre-configured on the AS.

S705: The IMS core sends the inference capability information of the MRF network element to the UE #1.

S706: The UE #1 determines that the MRF network element has a model inference capability.

Steps S704 to S706 are optional steps. Specifically, if S704 to S706 are performed, the UE #1 may learn, based on the inference capability information of the MRF network element, whether the MRF network element has the model inference capability. If S704 to S706 are not performed, the UE #1 may consider by default that the MRF network element has the model inference capability.

The following describes an inference negotiation process with reference to four scenarios.

Scenario 1: The UE #1 initiates call establishment.

S7111: The UE #1 sends an invite (INVITE) message to the IMS core.

It may be understood that the inference capability information of the UE #1 that is reported by the UE #1 in S701 may alternatively be sent in S7111. In other words, the method 700 may not include 701, and in S7111, the INVITE message includes the inference capability information of the UE #1.

Optionally, the invite (INVITE) message may further include information about a session and/or a current connection bandwidth of the UE #1.

In a possible case, the UE #1 considers by default that the MRF network element has the model inference capability. Therefore, the UE #1 includes the information about the session and/or the current connection bandwidth of the UE #1 in the INVITE message.

In another possible case, the UE #1 determines, based on the inference capability information of the MRF network element that is received in S705, whether the MRF network element has the model inference capability. If the UE #1 determines that the MRF network element has the model inference capability, the UE #1 includes the information about the session and/or the current connection bandwidth of the UE #1 in the INVITE message. If the UE #1 determines that the MRF network element does not have the model inference capability, the UE #1 does not include the information about the session and/or the current connection bandwidth of the UE #1 in the INVITE message. For a case in which the MRF network element does not have the model inference capability, in an example, the UE #1 may perform model inference. This embodiment of this application mainly describes a case in which the MRF network element has the model inference capability.

S7112: The IMS core sends the INVITE message to the AS.

After receiving the INVITE message, the IMS core transparently transmits the INVITE message to the AS.

S7113: The AS determines inference work division information based on the INVITE message.

For example, the AS may determine the inference work division information based on one or more of the following: the inference capability information of the MRF network element, the inference capability information of the UE #1, the information about the session, and the current connection bandwidth of the UE #1. For model inference information #1 and how to determine the model inference information #1, refer to the foregoing related descriptions.

It should be understood that model inference information #1 is a case of the inference work division information. In other words, if the AS determines that the UE #1 performs inference of a first partial model, the inference work division information is the model inference information #1. For the inference work division information and how to determine the inference work division information, refer to the foregoing related descriptions of the model inference information #1.

It should be noted that the information about the session may be carried in the INVITE message, or may be determined by the AS. For example, the AS may determine the information about the session based on application service logic and a session parameter.

S7114: The AS sends the inference work division information to the IMS core.

In a possible implementation, the AS sends an 18X For INVITE message or a 200 For INVITE message to the IMS core, where the 18X For INVITE message or the 200 For INVITE message carries an inference negotiation result of a current session, that is, the inference work division information.

In another possible implementation, the AS sends a provisional response acknowledgment (provisional response ACKnowledgment, PRACK) For INVITE message or an acknowledgment (ACKnowledgment, ACK) For INVITE message to the IMS core, where the PRACK For INVITE message or the ACK For INVITE message carries an inference negotiation result of a current session, that is, the inference work division information.

In an example, a form of the inference work division information is as follows:
AI-Negotiation-Response: Result=success; AI-Model-Identifier=model_xxx; AI-Model-Param=11M; Output-Data-Type=intermediate; Output-Tensor-Shape=[1,64,64]; Output-Tensor-Structure=Pytorch2.0; Intermediate-Compression=FC_VCM

For details about the fields listed herein, refer to the related descriptions in S6115. Details are not described herein again.

S7115: The IMS core sends the inference work division information to the UE #1.

After receiving the inference work division information sent by the AS, the IMS core forwards the inference work division information to the UE #1.

In a possible implementation, the IMS core sends the 18X For INVITE message or the 200 For INVITE message to the UE #1, where the 18X For INVITE message or the 200 For INVITE message carries the inference work division information.

S7116: The AS applies to the MRF network element for a resource.

When determining, based on the model inference information #1, that the MRF network element performs model inference, for example, when the inference work division information is the model inference information #1, the AS may apply to the MRF network element for the resource, that is, request the MRF network element to perform inference of a second partial model. In a possible implementation, the AS sends an INVITE message to the MRF network element, where the INVITE message is used to apply to the MRF network element for the resource related to performing inference of the second partial model. In an example, the INVITE message may be the resource request message described above, or the resource request message described above may be the INVITE message. In an example, the INVITE message may include model inference information #2.

For example, that the AS applies to the MRF for the resource includes: The AS requests the MRF network element to create or allocate an endpoint resource. Correspondingly, the MRF network element creates or allocates a corresponding resource endpoint (which is also referred to as a media endpoint), and returns information about the corresponding resource endpoint to the AS. For example, after receiving the INVITE message, the MRF network element creates or allocates two resource endpoints: a first resource endpoint and a second resource endpoint. An attribute of the first resource endpoint includes a local connection address of the first resource endpoint, and an attribute of the second resource endpoint includes a local connection address of the second resource endpoint. The local connection address of the first resource endpoint and the local connection address of the second resource endpoint are respectively used to cause the UE #1 to establish a communication connection to the MRF network element and cause UE #2 to establish a communication connection to the MRF network element.

For example, that the AS applies to the MRF for the resource may alternatively include: The AS requests the MRF network element to reserve or allocate a computing power resource. Correspondingly, the MRF network element reserves or allocates the corresponding computing power resource, for example, a memory or a CPU slot. For example, the AS sends an inference computing power requirement to the MRF network element, where the inference computing power requirement indicates computing power consumed by inference of a model, for example, inference of the second partial model, that the MRF network element is responsible for. In this way, the MRF network element may reserve or allocate the corresponding computing power resource based on the inference computing power requirement.

Optionally, a resource application result returned by the MRF network element to the AS may include result indication information and/or resource endpoint information. The result indication information may notify the AS whether the MRF network element is to perform inference of the model (for example, the second partial model) for which the MRF network element is responsible for inference. Further, optionally, it is assumed that the resource application result notifies the AS that the MRF network element is to perform inference of the model (for example, the second partial model) for which the MRF network element is responsible for inference. For example, the resource endpoint information includes the local connection address of the first resource endpoint and the local connection address of the second resource endpoint.

In a possible case, if the resource endpoint information returned by the MRF network element to the AS includes the local connection address of the first resource endpoint, the AS may send the local connection address of the first resource endpoint to the UE #1, so that the UE #1 communicates with the MRF network element by using the local connection address of the first resource endpoint. For example, the UE #1 sends, to the MRF network element, an inference result obtained after the MRF network element performs model inference. For example, the resource endpoint information and the inference work division information that are sent to the UE #1 may be carried in one piece of signaling or one message, or may be carried in different signaling or messages. This is not limited. In addition, if the resource endpoint information returned by the MRF network element to the AS includes the local connection address of the second resource endpoint, the AS may further send the local connection address of the second resource endpoint to the UE #2, so that the UE #2 communicates with the MRF network element by using the local connection address of the second resource endpoint. For example, the UE #2 obtains, from the MRF network element, output data of inference that is obtained after model inference is performed. The AS may directly send the local connection address of the second resource endpoint to the UE #2, or may send the local connection address of the second resource endpoint to the UE #2 via a network device to which the UE #2 belongs. This is not limited.

It may be understood that a sequence of performing S7114 and S7116 is not limited.

For example, S7114 is performed before S7116. In other words, after determining the inference work division information, the AS directly sends the inference work division information to the UE #1 via the IMS core. In this case, the local connection address and the inference work division information may be carried in different signaling. In other words, the AS first sends the inference work division information to the UE #1 via the IMS core, and then sends the local connection address to the UE #1 via the IMS core after receiving the local connection address from the MRF network element.

For another example, S7116 is performed before S7114. In other words, after determining the inference work division information, the AS may first apply to the MRF network element for the resource, and then send the inference work division information to the UE #1 via the IMS core. In this case, after receiving the local connection address from the MRF network element, the AS sends the inference work division information and the local connection address to the UE #1 via the IMS core. In an example, the local connection address and the inference work division information may be carried in one piece of signaling.

Scenario 2: The UE #1 receives call establishment.

S7121: The AS sends an INVITE message to the IMS core.

Optionally, the INVITE message is used to request the inference capability information of the UE #1. Alternatively, the INVITE message is used to request information about a session and/or a current connection bandwidth of the UE #1.

S7122: The IMS core sends the INVITE message to the UE #1.

If the INVITE message in S7121 is used to request the inference capability information of the UE #1, the INVITE message in S7122 is used to request the inference capability information of the UE #1. If the INVITE message in S7121 is used to request the information about the session and/or the current connection bandwidth of the UE #1, the INVITE message in S7122 is used to request the information about the session and/or the current connection bandwidth of the UE #1.

S7123: The UE #1 sends a 200 For INVITE message to the IMS core.

The 200 For INVITE message may carry a parameter requested by the INVITE message, for example, the inference capability information of the UE #1, the information about the session, and/or the current connection bandwidth of the UE #1.

It may be understood that the inference capability information of the UE #1 that is reported by the UE #1 in S701 may alternatively be sent in S7123. In other words, the method 700 may not include S701, and in S7123, the 200 For INVITE message includes the inference capability information of the UE #1.

The 200 For INVITE message in S7123 may alternatively be replaced with an 18X For INVITE message, and a specific type of the message is not limited.

S7124: The IMS core sends the 200 For INVITE message to the AS.

The 200 For INVITE message in S7124 may alternatively be replaced with an 18X For INVITE message, and a specific type of the message is not limited.

S7125: The AS determines model work division information based on the 200 For INVITE message.

For example, the AS may determine the inference work division information based on one or more of the following: the inference capability information of the MRF network element, the inference capability information of the UE #1, the information about the session, and the current connection bandwidth of the UE #1.

It should be understood that model inference information #1 is a case of the inference work division information. In other words, if the AS determines that the UE #1 performs inference of a first partial model, the inference work division information is the model inference information #1. For the inference work division information and how to determine the inference work division information, refer to the foregoing related descriptions of the model inference information #1.

It should be noted that the information about the session may be carried in the 200 For INVITE message, or may be determined by the AS. For example, the AS may determine the information about the session based on application service logic and a session parameter.

S7126: The AS sends the inference work division information to the IMS core.

S7127: The IMS core sends the inference work division information to the UE #1.

S7128: The AS applies to the MRF network element for a resource.

S7126 to S7128 are similar to S7114 to S7116, and details are not described herein again.

Scenario 3: The UE #1 initiates call update.

S7131: The UE #1 sends a reinvite (REINVITE) message to the IMS core.

In some cases, for example, in a session process, when an inference requirement of an inference service changes and/or available computing power for inference of the terminal changes, the terminal may initiate call update. In these cases, the UE #1 may send the REINVITE message to the IMS core, to perform inference negotiation again. For example, the REINVITE message may include the inference capability information of the UE #1 and a current connection bandwidth of the UE #1, and may further include information about a session.

S7132: The IMS core sends the REINVITE message to the AS.

S7133: The AS determines model work division information based on the REINVITE message.

In this embodiment of this application, for example, because work of a model inference task needs to be re-divided due to a change in an inference requirement and/or a change in available computing power for inference of the terminal, the AS may determine new inference work division information based on updated related information of the UE #1, for example, updated inference capability information of the UE #1, in S7135.

S7134: The AS sends the inference work division information to the IMS core.

S7135: The IMS core sends the inference work division information to the UE #1.

It should be understood that S7121 to S7125 are similar to S7111 to S7115. For details, refer to S7111 to S7115. Details are not described herein again.

S7136: The AS applies to the MRF network element for updating an inference resource.

When determining, based on the inference work division information, that inference is updated on an MRF network element side, the AS may apply to the MRF network element for updating the inference resource, that is, request the MRF network element to perform inference on a model for which the MRF network element is responsible for inference after work update. In a possible implementation, the AS sends a REINVITE message to the MRF network element, where the REINVITE message is used to apply for resource modification. For details, refer to the descriptions of S7116. Details are not described herein. It may be understood that, in this step, the MRF network element may re-create an endpoint resource, or may reuse the endpoint resource created or allocated in S7116. The MRF network element may reuse the computing power resource reserved or allocated in S7116, or may reallocate a computing power resource, where the reallocated computing power resource may be different from the computing power resource reserved or allocated in S7116.

Scenario 4: The UE #1 receives call update.

S7141: The AS sends a REINVITE message to the IMS core.

S7142: The IMS core sends the REINVITE message to the UE #1.

S7143: The UE #1 sends a 200 For REINVITE message to the IMS core.

S7144: The IMS core sends the 200 For REINVITE message to the AS.

S7145: The AS determines inference work division information based on the 200 For REINVITE message.

In this embodiment of this application, for example, because work of a model inference task needs to be re-divided due to a change in an inference requirement and/or a change in available computing power for inference of the terminal, the AS may determine new inference work division information based on updated related information of the UE #1, for example, updated inference capability information of the UE #1, in S7145.

S7146: The AS sends the inference work division information to the IMS core.

In a possible implementation, the AS sends an ACK For REINVITE message to the IMS core, where the ACK For REINVITE message includes the inference work division information.

S7147: The IMS core sends the inference work division information to the UE #1.

In a possible implementation, the IMS core sends the ACK For REINVITE message to the UE #1, where the ACK For REINVITE message includes the inference work division information.

It may be understood that S7141 to S7147 are similar to S7121 to S7127, and details are not described herein again.

S7148: The AS applies to the MRF network element for updating an inference resource.

When determining, based on the inference work division information, that inference is updated on an MRF network element side, the AS may apply to the MRF network element for updating the inference resource, that is, request the MRF network element to perform inference on a model for which the MRF network element is responsible for inference after work update. In a possible implementation, the AS sends a REINVITE message to the MRF network element, where the REINVITE message is used to apply for resource modification. For details, refer to the descriptions of S7116. Details are not described herein. It may be understood that, in this step, the MRF network element may re-create an endpoint resource, or may reuse the endpoint resource created or allocated in S7128. The MRF network element may reuse the computing power resource reserved or allocated in S7128, or may reallocate a computing power resource, where the reallocated computing power resource may be different from the computing power resource reserved or allocated in S7128.

The foregoing provides example descriptions with reference to the four scenarios. Regardless of the foregoing scenarios, after the inference work division information is determined, steps S7211 to S7214 or S7221 to S7224 below may be included. It should be noted that, in the following, it is assumed that the inference work division information indicates the UE #1 to perform inference of the first partial model, and inference of the second partial model is simultaneously performed by the MRF network element.

S7211: The UE #1 performs inference of the first partial model based on the inference work division information.

S7212: The UE #1 sends an inference result of the first partial model to the MRF network element.

In a possible implementation, the UE #1 sends the inference result of the first partial model to the MRF network element via the IMS core.

S7213: The MRF network element performs inference of the second partial model based on the inference result of the first partial model.

Steps S7211 to S7213 are similar to S440a to S460a in the method 400. For details, refer to S440a to S460a.

S7214: The MRF network element sends an inference result of the second partial model to the UE #2.

S7221: The MRF network element receives media data from the UE #2. For example, if a target model is used for a voice-to-text service, the media data is voice information.

S7222: The MRF network element performs inference of the second partial model on the media data.

S7223: The MRF network element sends the inference result of the second partial model to the UE #1.

In a possible implementation, the MRF network element sends the inference result of the second partial model to the UE #1 via the IMS core.

S7224: The UE #1 performs inference of the first partial model based on the inference result of the second partial model and the inference work division information.

Steps S7222 to S7223 are similar to S440b to S460b in the method 400. For details, refer to S440b to S460b.

Based on the foregoing technical solution, in a process of registering with the IMS, the terminal may report inference capability information of the terminal to the AS, and the AS may also notify the terminal of the inference capability information of the MRF network element. When determining that the MRF network element has the model inference capability, the terminal may include capability information of the terminal, information about a session, and/or a current connection bandwidth of the terminal in a call request, to request to perform inference negotiation. The AS may determine the inference work division information based on the capability information of the terminal, the information about the session, the current connection bandwidth of the terminal, and/or the like. For example, the AS may obtain a computing power requirement of an inference task through calculation, and determine whether the available computing power for inference of the terminal is exceeded. If the available computing power for inference of the terminal is exceeded, the AS may further determine inference work division of the current session with reference to the inference capability information of the MRF network element, and notify the terminal of an inference negotiation result. When the MRF network element participates in model inference, the AS applies to the MRF network element for an inference resource, so that the MRF network element can perform model inference. Then, the terminal and the AS perform model inference that they are respectively responsible for. In addition, if work of an inference task may need to be re-divided due to some cases in a session process, for example, a change in an inference requirement, the terminal may re-initiate inference negotiation, and perform inference negotiation again based on an updated inference requirement.

It may be understood that, in the solution shown in FIG. 7, how to divide work is determined by the AS (for example, S7113 and 7125). In a possible solution, how to divide work may alternatively be determined by the terminal. For example, the UE #1 may determine the inference work division information based on the inference capability information of the UE #1, the information about the session, and the current connection bandwidth of the UE #1. Optionally, before S7211 or S7221 is performed, the UE #1 may further send the inference work division information to the AS network element.

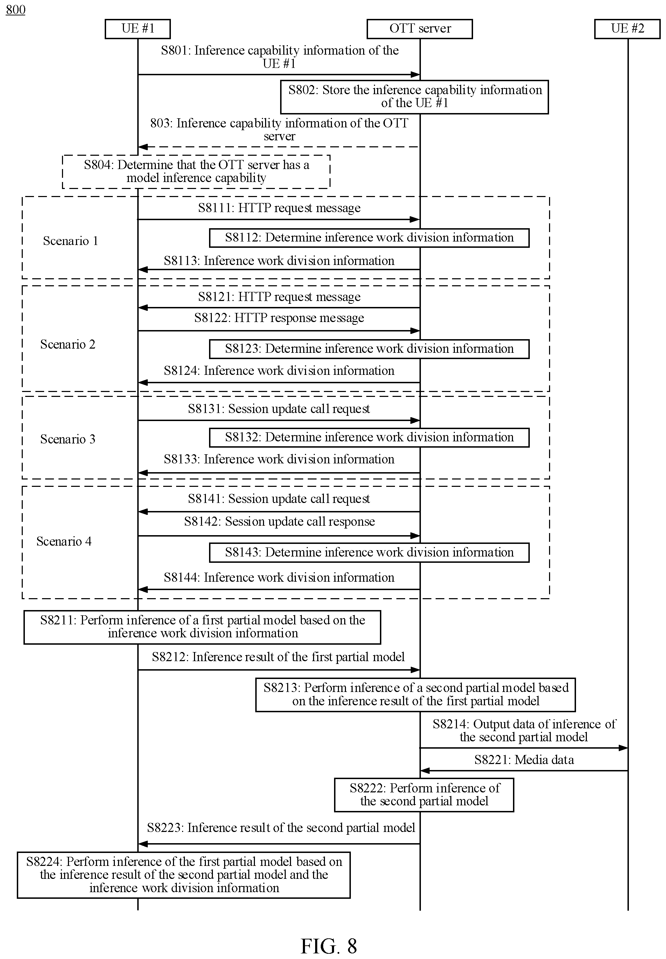

FIG. 8 is a schematic flowchart of a model inference method 800 according to an embodiment of this application. The method 800 may be used to implement the solution of the foregoing method 400. In the method 800, inference negotiation between a terminal and a network may be completed based on an HTTP/HTTPS message. Inference negotiation may be completed, for example, in a call establishment process. In the method 800, it is assumed that a first network device and a second network device are OTT servers. In an example, the method 800 shown in FIG. 8 may be used in the architecture in FIG. 3. The following describes steps in the method 800.

S801: UE #1 sends inference capability information of the UE #1 to an OTT server.

In a possible implementation, in a process of registering with the OTT server, the UE #1 sends the inference capability information to the OTT server. For example, the UE #1 sends an HTTP request message to the OTT server, where the HTTP request message carries the inference capability information of the UE #1.

In an example, a format of the inference capability information of the UE #1 may be a json format, which is as follows:

```
             Content-Type:application/json
             {
             "AI-Capability":{
             "AI-Inference": "1.2TFlops", //indicating available computing power for inference
 of the UE #1
             "AI-Precision": "INT16", //indicating inference precision of the UE #1
             "Cache":"1G", //indicating an available cache for inference of the UE #1
             "AI-Framework": "WebNN v1.2", //indicating an AI/ML framework and a version
 number for inference of the UE #1
             "Intermediate-compression": "FC_VCM"} //indicating an intermediate data
 compression algorithm supported by the UE #1
             }
```

In another example, a format of the inference capability information of the UE #1 may be an XML format, which is as follows:

```
             Content-Type:application/xml
             <AI-Capability>
             <AI-Inference Value="1.2TFlops"> //indicating available computing power for
 inference of the UE #1
             <AI-Precision Value="INT16"> //indicating inference precision of the UE #1
             <Cache Value="1G"> //indicating an available cache for inference of the UE #1
             <AI-Framework Value="WebNN v1.2"> //indicating an AI/ML framework and a
 version number for inference of the UE #1,
             <Intermediate-compression Value="FC_VCM"> //indicating an intermediate data
 compression algorithm supported by the UE #1
             </AI -Capability>
```

For the foregoing parameters, refer to the foregoing related descriptions. Details are not described herein again.

S802: The OTT server stores the inference capability information of the UE #1.

For example, after successfully performing registration authentication on the UE #1, the OTT server may store (or record) the inference capability information of the UE #1.

Optionally, the method 800 further includes S803 and S804.

S803: The OTT server sends inference capability information of the OTT server to the UE #1.

In a possible implementation, the OTT server sends an HTTP response message to the UE #1, where the HTTP response message includes the inference capability information of the OTT server.

S804: The UE #1 determines that the OTT server has a model inference capability.

The UE #1 may learn, based on the inference capability information of the OTT server, whether the OTT server has the model inference capability. S803 and S804 are optional steps. To be specific, the OTT server may not need to provide the inference capability information of the OTT server for the UE #1, and the UE #1 may consider by default that the OTT server has the model inference capability.

The following describes an inference negotiation process with reference to four scenarios.

Scenario 1: The UE #1 initiates inference negotiation.

S8111: The UE #1 sends an HTTP request message to the OTT server.

It may be understood that the inference capability information of the UE #1 that is reported by the UE #1 in S801 may alternatively be sent in S8111. In other words, the method 800 may not include 801, and in S8111, the HTTP request message includes the inference capability information of the UE #1.

Optionally, the HTTP request message may further include information about a session and/or a current connection bandwidth of the UE #1.

In a possible case, the UE #1 considers by default that the OTT server has the model inference capability. Therefore, the UE #1 includes the information about the session and/or the current connection bandwidth of the UE #1 in the HTTP request message.

In another possible case, the UE #1 determines, based on the inference capability information of the OTT server that is received in S803, whether the OTT server has the model inference capability. If the UE #1 determines that the OTT server has the model inference capability, the UE #1 includes the information about the session and/or the current connection bandwidth of the UE #1 in the HTTP request message. If the UE #1 determines that the OTT server does not have the model inference capability, the UE #1 does not include the information about the session and/or the current connection bandwidth of the UE #1 in the HTTP request message. For a case in which the OTT server does not have the model inference capability, in an example, the UE #1 may perform model inference. This embodiment of this application mainly describes a case in which the OTT server has the model inference capability.

In an example, a format of a parameter carried in the HTTP request message may be a json format, which is as follows:

```
             Content-Type:application/json
             {
             "AI-Capability":{
             "AI-Inference": "1.2TFlops", //indicating available computing power for inference
 of the UE #1
             "AI-Precision": "INT16", //indicating inference precision of the UE #1
             "Cache":"1G", //indicating an available cache for inference of the UE #1
             "AI-Framework": "WebNN v1.2", //indicating an AI/ML framework and a version
 number for inference of the UE #1
             "Intermediate-compression": "FC_VCM", //indicating an intermediate data
 compression algorithm supported by the UE #1
             "AI-Model-Type": "NLP", //indicating a model type
             "Bandwidth": "256K"} //indicating the current connection bandwidth of the UE #1
             }
```

In another example, a format of a parameter carried in the HTTP request message may be an XML format, which is as follows:

```
             Content-Type:application/xml
             <AI-Capability>
             <AI-Inference Value="1.2TFlops"> //indicating available computing power for
 inference of the UE #1
             <AI-Precision Value="INT16"> //indicating inference precision of the UE #1
             <Cache Value="1G"> indicating an available cache for inference of the UE #1
             <AI-Framework Value="WebNN v1.2"> //indicating an AI/ML framework and a
 version number for inference of the UE #1
             <Intermediate-compression Value="FC_VCM"> //indicating an intermediate data
 compression algorithm supported by the UE #1
             <AI-Model-Type Value="NLP"> //indicating a model type
             <Bandwidth Value="256K" //indicating the current connection bandwidth of the
 UE #1
```

For the foregoing parameters, refer to the foregoing related descriptions. Details are not described herein again.

S8112: The OTT server determines inference work division information based on the HTTP request message.

For example, the OTT server may determine the inference work division information based on one or more of the following: the inference capability information of the OTT server, the inference capability information of the UE #1, the information about the session, and the current connection bandwidth of the UE #1. For model inference information #1 and how to determine the model inference information #1, refer to the foregoing related descriptions.

It should be understood that model inference information #1 is a case of the inference work division information. In other words, if the OTT server determines that the UE #1 performs inference of a first partial model, the inference work division information is the model inference information #1. For the inference work division information and how to determine the inference work division information, refer to the foregoing related descriptions of the model inference information #1.

It should be noted that the information about the session may be carried in the HTTP request message, or may be determined by the OTT server. For example, the OTT server may determine the information about the session based on application service logic and a session parameter.

S8113: The OTT server sends the inference work division information to the UE #1.

In a possible implementation, the OTT server sends an HTTP response message to the UE #1, where the HTTP response message carries an inference negotiation result of a current session, that is, the inference work division information.

In an example, a format of the inference work division information may be a json format, which is as follows:

```
             Content-Type:application/json
             {
             "AI-Negotiation-Response":{
             "Result": "success",
             "AI-Model-Identifier": "model_xxx",
             "AI-Model-Param": "11M",
             "Output-Data-Type": "intermediate",
             "Output-Tensor-Shape": "[1,64,64]",
             "Output-Tensor-Structure": "Pytorch2.0",
             "Intermediate-Compression": "FC_VCM"}
             }
```

In another example, a format of the inference work division information may be an XML format, which is as follows:

```
             Content-Type:application/xml
             <AI-Negotiation-Response>
             <Result Value="success">
             <AI-Model-Identifier Value="model_xxx">
             <AI-Model-Param Value="11M">
             <Output-Data-Type Value="intermediate">
             <Output-Tensor-Shape Value="[1,64,64]">
             <Output-Tensor-Structure Value= "Pytorch2.0">
             <Intermediate-Compression Value="FC_VCM">
             </AI-Negotiation-Response>
```

For the fields involved in the foregoing two examples, refer to the related descriptions in S6114. Details are not described herein again.

Scenario 2: The UE #1 receives inference negotiation.

S8121: The OTT server sends an HTTP request message to the UE #1.

Optionally, the HTTP request message is used to request the inference capability information of the UE #1. Alternatively, the HTTP request message is used to request information about a session and/or a current connection bandwidth of the UE #1.

S8122: The UE #1 sends an HTTP response message to the OTT server.

The HTTP response message may carry a parameter requested by the HTTP request message, for example, the inference capability information of the UE #1, the information about the session, and/or the current connection bandwidth of the UE #1.

It may be understood that the inference capability information of the UE #1 that is reported by the UE #1 in S801 may alternatively be sent in S8122. In other words, the method 800 may not include S801, and in S8122, the HTTP response message includes the inference capability information of the UE #1.

S8123: The OTT server determines model work division information based on the HTTP response message.

For example, the OTT server may determine the inference work division information based on one or more of the following: the inference capability information of the OTT server, the inference capability information of the UE #1, the information about the session, and the current connection bandwidth of the UE #1.

It should be understood that model inference information #1 is a case of the inference work division information. In other words, if the OTT server determines that the UE #1 performs inference of a first partial model, the inference work division information is the model inference information #1. For the inference work division information and how to determine the inference work division information, refer to the foregoing related descriptions of the model inference information #1.

It should be noted that the information about the session may be carried in the HTTP response message, or may be determined by the OTT server. For example, the OTT server may determine the information about the session based on application service logic and a session parameter.

S8124: The OTT server sends the model work division information to the UE #1.

In a possible implementation, the OTT server sends an HTTP message to the UE #1, where the HTTP message includes the model work division information.

S8124 is similar to S8113, and details are not described herein again.

Scenario 3: The UE #1 initiates inference renegotiation (or model inference renegotiation).

S8131: The UE #1 sends a session update call request to the OTT server.

In a possible implementation, the UE #1 sends an HTTP message to the OTT server, where the HTTP message includes the session update call request, or the HTTP message is used to request a session update call.

In some cases, for example, in a session process, when an inference requirement of an inference service changes and/or available computing power for inference of the terminal changes, the terminal may initiate call update. In these cases, the UE #1 may send the session update call request to the OTT server, to perform inference negotiation again. For example, the session update call request may include the inference capability information of the UE #1 and a current connection bandwidth of the UE #1, and may further include information about a session.

S8132: The OTT server determines model work division information based on the session update call request.

In this embodiment of this application, for example, because work of a model inference task needs to be re-divided due to a change in an inference requirement and/or a change in available computing power for inference of the terminal, the OTT server may determine new inference work division information based on updated related information of the UE #1, for example, updated inference capability information of the UE #1, in S8132.

S8133: The OTT server sends the inference work division information to the UE #1.

It should be understood that S8131 to S8133 are similar to S8111 to S8113, and details are not described herein again.

Scenario 4: The UE #1 receives inference renegotiation (or model inference renegotiation).

S8141: The OTT server sends a session update call request to the UE #1.

S8142: The UE #1 sends a session update call response to the OTT server.

S8143: The OTT server determines inference work division information based on the session update call response.

In this embodiment of this application, for example, because work of a model inference task needs to be re-divided due to a change in an inference requirement and/or a change in available computing power for inference of the terminal, the OTT server may determine new inference work division information based on updated related information of the UE #1, for example, updated inference capability information of the UE #1, in S8143.

S8144: The OTT server sends the inference work division information to the UE #1.

It should be understood that S8141 to S8144 are similar to S8121 to S8124, and details are not described herein again.

The foregoing provides example descriptions with reference to the four scenarios. Regardless of the foregoing scenarios, after the inference work division information is determined, steps S8211 to S8214 or S8221 to S8224 below may be included. It should be noted that, in the following, it is assumed that the inference work division information indicates the UE #1 to perform inference of the first partial model, and inference of the second partial model is simultaneously performed by the OTT server.

S8211: The UE #1 performs inference of the first partial model based on the inference work division information.

S8212: The UE #1 sends an inference result of the first partial model to the OTT server.

S8213: The OTT server performs inference of the second partial model based on the inference result of the first partial model.

Steps S8211 to S8213 are similar to S440a to S460a in the method 400. For details, refer to S440a to S460a.

S8214: The OTT server sends an inference result of the second partial model to UE #2.

S8221: The OTT server receives media data from the UE #2. For example, if a target model is used for a voice-to-text service, the media data is voice information.

S8222: The OTT server performs inference of the second partial model on the media data.

S8223: The OTT server sends the inference result of the second partial model to the UE #1.

In a possible implementation, the OTT server sends the inference result of the second partial model to the UE #1 via the IMS core.

S8224: The UE #1 performs inference of the first partial model based on the inference result of the second partial model and the inference work division information.

Steps S8222 to S8224 are similar to S440b to S460b in the method 400. For details, refer to S440b to S460b.

It may be understood that the foregoing method 800 is mainly described by using the OTT server as an example. As described above, the OTT server may include a signaling server (which is alternatively referred to as an OTT signaling server), a media processing server (which is alternatively referred to as an OTT media server or an OTT media processing server), and a routing server. Different servers may perform different functions. In an example, the first network device is a signaling server, and the second network device is a media processing server. For details, refer to the descriptions of the method 600 or 700. Details are not described herein again.

Based on the foregoing technical solution, when the terminal registers with the OTT server, the terminal and the OTT server may exchange respective inference capability information. When determining that the OTT server has the model inference capability, the terminal may perform inference negotiation with the OTT server by using a session call request. For example, the OTT server may obtain a computing power requirement of an inference task through calculation, and determine whether the available computing power for inference of the terminal is exceeded. If the available computing power for inference of the terminal is exceeded, the OTT server may further determine inference work division of the current session with reference to the inference capability information of the OTT server, and notify the terminal of an inference negotiation result. Then, the terminal and the OTT server perform model inference that they are respectively responsible for. In addition, if work of an inference task may need to be re-divided due to some cases in a session process, for example, a change in an inference requirement, the terminal may re-initiate inference negotiation, and perform inference negotiation again based on an updated inference requirement.

It should be noted that, in some of the foregoing embodiments, that output data of inference is sent to another end of the session (for example, another terminal (for example, the UE #2) or a server) is described as an example only. In a design, the output data of inference may be sent to the another end of the session, or data obtained after the output data of inference is encoded or data obtained after other processing is performed on the output data of inference may be sent to the another end of the session. Specifically, how to process the output data of inference or how to send the output data of inference to the another end of the session may be determined based on a specific requirement. For details, refer to the conventional technology.

It should be further noted that, in some of the foregoing embodiments, this application describes operations (for example, encoding, decoding, compression, or decompression) related to the output data of inference or data obtained based on the received output data of inference. It should be understood that these descriptions are merely examples for description, and shall not constitute any limitation on this application. For example, in some implementations, other direct or indirect processing may further need to be performed on the output data of inference or the data obtained based on the received output data of inference.

It may be understood that, in the solution shown in FIG. 8, how to divide work is determined by the OTT server (for example, S8112 and S8123). In a possible solution, how to divide work may alternatively be determined by the terminal. For example, the UE #1 may determine the inference work division information based on the inference capability information of the UE #1, the information about the session, and the current connection bandwidth of the UE #1.

It may be understood that the examples in FIG. 5 to FIG. 8 in embodiments of this application are merely intended to help a person skilled in the art understand embodiments of this application, but are not intended to limit embodiments of this application to specific scenarios in the examples. It is clear that a person skilled in the art can make various equivalent modifications or variations to the examples in FIG. 5 to FIG. 8, and such modifications or variations also fall within the scope of embodiments of this application.

It may be further understood that the steps in FIG. 5 to FIG. 8 are merely examples for description, and are not strictly limited. In addition, sequence numbers of the foregoing processes do not mean execution sequences. The execution sequences of the processes should be determined based on functions and internal logic of the processes, and should not be construed as any limitation on the implementation processes of embodiments of this application.

It may be further understood that, in some of the foregoing embodiments, a network element in an existing network architecture is mainly used as an example for description. It should be understood that a specific form of the network element is not limited in embodiments of this application. For example, all network elements that can implement a same function in the future are applicable to embodiments of this application.

It may be further understood that, in some of the foregoing embodiments, performing inference on a first partial model and performing inference of the first partial model may be mutually replaced. Similarly, performing inference on a second partial model and performing inference of the second partial model may be mutually replaced.

It may be further understood that, in some of the foregoing embodiments, sending media data may be replaced with sending data.

It may be further understood that some message names in embodiments of this application do not limit the protection scope of embodiments of this application. For example, both a REINVITE message and a 200 For REINVITE message are examples for description, and the 200 For REINVITE message may be understood as a response message of the REINVITE message. For another example, an HTTP request message and an HTTP response message are named for differentiation, and both are HTTP messages. It may be understood that an example in which A sends a message to B is used, and any message that can be used between A and B is applicable to embodiments of this application.

It may be further understood that, in some of the foregoing embodiments, sending a message is mentioned a plurality of times. An example in which A sends a message to B is used. That A sends the message to B may include that A directly sends the message to B, or may include that A sends the message to B via another device or network element. This is not limited.

It may be further understood that, in the foregoing method embodiments, methods and operations implemented by devices may alternatively be implemented by components (for example, chips or circuits) of the devices. This is not limited.

Corresponding to the methods provided in the foregoing method embodiments, embodiments of this application further provide corresponding apparatuses. The apparatus includes a corresponding module configured to perform the foregoing method embodiments. The module may be software, hardware, or a combination of software and hardware. It may be understood that the technical features described in the method embodiments are also applicable to the following apparatus embodiments.

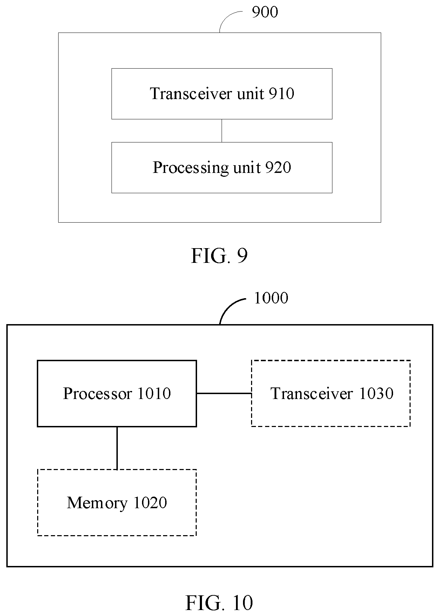

FIG. 9 is a diagram of a communication apparatus 900 according to an embodiment of this application. The apparatus 900 includes a transceiver unit 910 and a processing unit 920. The transceiver unit 910 may be configured to implement a corresponding communication function. The transceiver unit 910 may also be referred to as a communication interface or a communication unit. The processing unit 920 may be configured to perform a processing operation, for example, determine a rendering manner.

Optionally, the apparatus 900 further includes a storage unit. The storage unit may be configured to store instructions and/or data, and the processing unit 920 may read the instructions and/or the data in the storage unit, so that the apparatus implements actions of the network device (for example, the first network device or the second network device) or the terminal in the foregoing method embodiments.

In a first design, the apparatus 900 may be the terminal (for example, the terminal in FIG. 4 or the UE in FIG. 5 to FIG. 8) in the foregoing embodiment, or may be a component (for example, a chip) of the terminal. The apparatus 900 may implement the corresponding steps or procedures performed by the terminal in the foregoing method embodiment. The transceiver unit 910 may be configured to perform an operation related to sending and receiving (for example, an operation of sending and/or receiving data or a message) of the terminal in the foregoing method embodiment. For example, the transceiver unit 910 may be configured to perform an operation of the terminal of sending and/or receiving data or a message in FIG. 4, and may be further configured to perform an operation of the UE of sending and/or receiving data or a message in FIG. 5 to FIG. 8. The processing unit 920 may be configured to perform an operation related to processing of the terminal in the foregoing method embodiment, or an operation other than the sending and receiving operations (for example, an operation other than sending and/or receiving data or a message). For example, the processing unit 920 may be configured to perform S440a or S440b in FIG. 4. For another example, the processing unit 920 may be configured to perform processing operations of the UE in FIG. 5 to FIG. 8.

In a possible implementation, the transceiver unit 910 is configured to receive model inference information from a first network device, where the model inference information is used by the terminal to perform inference of a first partial model related to a session; the processing unit 920 is configured to perform inference of the first partial model based on the model inference information; and the transceiver unit 910 is further configured to send an inference result of the first partial model to a second network device.

In a possible implementation, the transceiver unit 910 is configured to receive model inference information from a first network device, where the model inference information is used by the terminal to perform inference of a first partial model related to a session; the transceiver unit 910 is further configured to receive an inference result of a second partial model related to the session from the second network device; and the processing unit 920 is configured to perform inference of the first partial model based on the inference result of the second partial model and the model inference information.

Optionally, the transceiver unit 910 is further configured to send inference capability information of the terminal to the first network device.

Optionally, the inference capability information includes one or more of the following: available computing power for inference, inference precision, an available cache for inference, an AI/ML framework and a version number for inference, or a supported intermediate data compression algorithm.

Optionally, the available computing power for inference is determined by the terminal based on a configuration of a computing resource of the terminal, or the available computing power for inference is determined by the terminal based on a remaining computing resource or an available computing resource of the terminal.

Optionally, the transceiver unit 910 is further configured to send information about the session and/or a current connection bandwidth of the terminal to the first network device.

Optionally, the model inference information includes an identifier of the first partial model.

Optionally, the model inference information further includes one or more of the following: a quantity of parameters of the first partial model, a type of output data of inference, an intermediate data tensor shape, an intermediate data tensor structure, or an intermediate data compression algorithm.

Optionally, the transceiver unit 910 is specifically configured to send a first message to the first network device, where the first message includes the inference capability information, and the first message is a registration request message or a session call message.

Optionally, the second network device is an artificial intelligence AI/deep learning ML media plane network element, and the first network device is an AI/ML control plane network element; or the second network device is a media resource function network element, and the first network device is an application server; or the second network device is an internet service media server, and the first network device is an internet service signaling server.

Optionally, the transceiver unit 910 is specifically configured to send the inference capability information to the first network device when the second network device has a model inference capability.

Optionally, the transceiver unit 910 or the processing unit 920 is further configured to obtain capability indication information of the second network device, where the capability indication information indicates that the second network device has the model inference capability.

In a second design, the apparatus 900 may be the first network device (for example, the first network device in FIG. 4, the network device in FIG. 5, the XR-C network element in FIG. 6, the AS in FIG. 7, or the OTT server in FIG. 8) in the foregoing embodiment, or may be a component (for example, a chip) of the first network device. The apparatus 900 may implement the steps or procedures performed by the first network device in the foregoing method embodiment. The transceiver unit 910 may be configured to perform an operation related to sending and receiving (for example, an operation of sending and/or receiving data or a message) of the first network device in the foregoing method embodiment, or may be configured to perform an operation of the network device in FIG. 5 of sending and/or receiving data or a message, or may be configured to perform an operation of the XR-C network element in FIG. 6 of sending and/or receiving data or a message, or may be configured to perform an operation of the AS in FIG. 7 of sending and/or receiving data or a message, or may be configured to perform an operation of the OTT server in FIG. 8 of sending and/or receiving data or a message. The processing unit 920 may be configured to perform an operation related to data and/or information processing of the first network device in the foregoing method embodiment, or an operation other than sending and receiving (for example, an operation other than sending and/or receiving data or a message). For example, the processing unit 920 may be configured to perform an operation related to data and/or information processing of the first network device in FIG. 4, or may be configured to perform an operation related to data and/or information processing of the network device in FIG. 5, or may be configured to perform an operation related to data and/or information processing of the XR-C network element in FIG. 6, or may be configured to perform an operation related to data and/or information processing of the AS in FIG. 7, or may be configured to perform an operation related to data and/or information processing of the OTT server in FIG. 8.

In a possible implementation, the processing unit 920 is configured to determine model inference information, where the model inference information is used by a terminal to perform inference of a first partial model related to a session; and the transceiver unit 910 is configured to send the model inference information to the terminal.

Optionally, the model inference information includes an identifier of the first partial model.

Optionally, the model inference information further includes one or more of the following: a quantity of parameters of the first partial model, a type of output data of inference, an intermediate data tensor shape, an intermediate data tensor structure, or an intermediate data compression algorithm.

Optionally, the processing unit 920 is specifically configured to determine the model inference information based on one or more of the following: inference capability information of the terminal, inference capability information of a second network device, information about the session, or a current connection bandwidth of the terminal, where the second network device is configured to perform inference of a second partial model related to the session.

Optionally, the transceiver unit 910 is further configured to receive the inference capability information of the terminal from the terminal.

Optionally, the inference capability information of the terminal is carried in a registration request message or a session call message.

Optionally, the transceiver unit 910 is further configured to send capability indication information of the second network device to the terminal, where the capability indication information indicates that the second network device has a model inference capability.

Optionally, the transceiver unit 910 is further configured to send an identifier of the second partial model related to the session to the second network device.

Optionally, the transceiver unit 910 is specifically configured to send a resource request message to the second network device, where the resource request message includes the identifier of the second partial model, the resource request message is used to request the second network device to reserve a resource, and the resource is used to perform inference of the second partial model.

Optionally, the resource request information further includes address information of the terminal.

Optionally, the transceiver unit 910 is specifically configured to send indication information to the second network device, where the indication information indicates the second network device to perform inference of the second partial model, and the indication information includes the identifier of the second partial model.

In a third design, the apparatus 900 may be the second network device (for example, the second network device in FIG. 4, the network device in FIG. 5, the XR-M network element in FIG. 6, the MRF network element in FIG. 7, or the OTT server in FIG. 8) in the foregoing embodiment, or may be a component (for example, a chip) of the second network device. The apparatus 900 may implement the steps or procedures performed by the second network device in the foregoing method embodiment. The transceiver unit 910 may be configured to perform an operation related to sending and receiving (for example, an operation of sending and/or receiving data or a message) of the second network device in the foregoing method embodiment, or may be configured to perform an operation of the network device in FIG. 5 of sending and/or receiving data or a message, or may be configured to perform an operation of the XR-M network element in FIG. 6 of sending and/or receiving data or a message, or may be configured to perform an operation of the MRF network element in FIG. 7 of sending and/or receiving data or a message, or may be configured to perform an operation of the OTT server in FIG. 8 of sending and/or receiving data or a message. The processing unit 920 may be configured to perform an operation related to data and/or information processing of the second network device in the foregoing method embodiment, or an operation other than sending and receiving (for example, an operation other than sending and/or receiving data or a message). For example, the processing unit 920 may be configured to perform an operation related to data and/or information processing of the second network device in FIG. 4, or may be configured to perform an operation related to data and/or information processing of the network device in FIG. 5, or may be configured to perform an operation related to data and/or information processing of the XR-M network element in FIG. 6, or may be configured to perform an operation related to data and/or information processing of the MRF network element in FIG. 7, or may be configured to perform an operation related to data and/or information processing of the OTT server in FIG. 8.

In a possible implementation, the transceiver unit 910 is configured to receive an identifier of a second partial model from a first network device; the transceiver unit 910 is further configured to receive an inference result of a first partial model from a terminal; and the processing unit 920 is configured to perform inference of the second partial model based on the inference result of the first partial model.

In a possible implementation, the transceiver unit 910 is configured to receive an identifier of a second partial model from a first network device; the processing unit 920 is configured to perform inference of the second partial model; and the transceiver unit 910 is further configured to send, to the terminal, an inference result of the second partial model that is obtained by performing inference of the second partial model.

Optionally, the transceiver unit 910 is specifically configured to receive a resource request message from the first network device, where the resource request message includes the identifier of the second partial model, the resource request message is used to request the second network device to reserve a resource, and the resource is used to perform inference of the second partial model.

Optionally, the resource request message further includes address information of the terminal.

Optionally, the transceiver unit 910 is specifically configured to receive indication information from the first network device, where the indication information indicates the second network device to perform inference of the second partial model, and the indication information includes the identifier of the second partial model.

It may be understood that specific processes in which the units perform the foregoing corresponding steps are described in detail in the foregoing method embodiments. For brevity, details are not described herein again.

It may be further understood that the apparatus 900 herein is embodied in a form of a functional unit. A term "unit" herein may mean an application-specific integrated circuit (application specific integrated circuit, ASIC), an electronic circuit, a processor (for example, a shared processor, a special-purpose processor, or a group processor) configured to execute one or more software or firmware programs, a memory, a merged logic circuit, and/or another appropriate component that supports the described functions. In an optional example, a person skilled in the art may understand that the apparatus 900 may be specifically the terminal (for example, the terminal in FIG. 4, or the UE in FIG. 5 to FIG. 8) in the foregoing embodiment, and may be configured to perform the procedures and/or steps corresponding to the terminal in the foregoing method embodiment, for example, the steps performed by the terminal in FIG. 4 or the steps performed by the UE in FIG. 5 to FIG. 8. Alternatively, the apparatus 900 may be specifically the first network device (for example, the first network device in FIG. 4, the network device in FIG. 5, the XR-C network element in FIG. 6, the AS in FIG. 7, or the OTT server in FIG. 8) in the foregoing embodiment, and may be configured to perform the procedures and/or steps corresponding to the first network device in the foregoing method embodiment, for example, the steps performed by the first network device in FIG. 4, the steps performed by the network device in FIG. 5, the steps performed by the XR-C network element in FIG. 6, the steps performed by the AS in FIG. 7, or the steps performed by the OTT server in FIG. 8. Alternatively, the apparatus 900 may be specifically the second network device (for example, the second network device in FIG. 4, the network device in FIG. 5, the XR-M network element in FIG. 6, the MRF network element in FIG. 7, or the OTT server in FIG. 8) in the foregoing embodiment, and may be configured to perform the procedures and/or steps corresponding to the second network device in the foregoing method embodiment, for example, the steps performed by the second network device in FIG. 4, the steps performed by the network device in FIG. 5, the steps performed by the XR-M network element in FIG. 6, the steps performed by the MRF network element in FIG. 7, or the steps performed by the OTT server in FIG. 8. To avoid repetition, details are not described herein again.

The apparatus 900 in each of the foregoing solutions has functions of implementing the corresponding steps performed by the terminal (for example, the terminal in FIG. 4, or the UE in FIG. 5 to FIG. 8) in the foregoing method; or the apparatus 900 in each of the foregoing solutions has functions of implementing the corresponding steps performed by the first network device (for example, the first network device in FIG. 4, the network device in FIG. 5, the XR-C network element in FIG. 6, the AS in FIG. 7, or the OTT server in FIG. 8) in the foregoing method; or the apparatus 900 in each of the foregoing solutions has functions of implementing the corresponding steps performed by the second network device (for example, the second network device in FIG. 4, the network device in FIG. 5, the XR-M network element in FIG. 6, the MRF network element in FIG. 7, or the OTT server in FIG. 8) in the foregoing method. The functions may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving and sending operations and a related processing operation in the method embodiments.

In addition, the transceiver unit 910 may alternatively be a transceiver circuit (for example, may include a receiving circuit and a sending circuit), and the processing unit may be a processing circuit.

It may be understood that the apparatus in FIG. 9 may be the device in the foregoing embodiment, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 10 is a diagram of another communication apparatus 1000 according to an embodiment of this application. The apparatus 1000 includes a processor 1010. The processor 1010 is configured to execute a computer program or instructions stored in a memory 1020, or read data stored in the memory 1020, to perform the methods in the foregoing method embodiments. Optionally, there are one or more processors 1010.

Optionally, as shown in FIG. 10, the apparatus 1000 further includes the memory 1020, and the memory 1020 is configured to store the computer program or instructions and/or data. The memory 1020 and the processor 1010 may be integrated, or may be disposed separately. Optionally, there are one or more memories 1020.

Optionally, as shown in FIG. 10, the apparatus 1000 further includes a transceiver 1030, and the transceiver 1030 is configured to receive and/or send a signal. For example, the processor 1010 is configured to control the transceiver 1030 to receive and/or send the signal.

In a solution, the apparatus 1000 is configured to implement the operations performed by the terminal (for example, the terminal in FIG. 4, or the UE in FIG. 5 to FIG. 8) in the foregoing method embodiment.

In another solution, the apparatus 1000 is configured to implement the operations performed by the first network device (for example, the first network device in FIG. 4, the network device in FIG. 5, the XR-C network element in FIG. 6, the AS in FIG. 7, or the OTT server in FIG. 8) in the foregoing method embodiment.

In another solution, the apparatus 1000 is configured to implement the operations performed by the second network device (for example, the second network device in FIG. 4, the network device in FIG. 5, the XR-M network element in FIG. 6, the MRF network element in FIG. 7, or the OTT server in FIG. 8) in the foregoing method embodiment.

It may be understood that the processor mentioned in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification is intended to include but is not limited to these memories and any memory of another proper type.

An embodiment of this application further provides a computer-readable storage medium. The computer-readable storage medium stores computer instructions for implementing the method performed by the terminal device (for example, the terminal in FIG. 4, or the UE in FIG. 5 to FIG. 8) in the foregoing method embodiment.

An embodiment of this application further provides a computer-readable storage medium. The computer-readable storage medium stores computer instructions for implementing the method performed by the first network device (for example, the first network device in FIG. 4, the network device in FIG. 5, the XR-C network element in FIG. 6, the AS in FIG. 7, or the OTT server in FIG. 8) in the foregoing method embodiment.

An embodiment of this application further provides a computer-readable storage medium. The computer-readable storage medium stores computer instructions for implementing the method performed by the second network device (for example, the second network device in FIG. 4, the network device in FIG. 5, the XR-M network element in FIG. 6, the MRF network element in FIG. 7, or the OTT server in FIG. 8) in the foregoing method embodiment.

An embodiment of this application further provides a computer program product, including instructions. When the instructions are executed by a computer, the method performed by the terminal (for example, the terminal in FIG. 4, or the UE in FIG. 5 to FIG. 8) in the foregoing method embodiment is implemented.

An embodiment of this application further provides a computer program product, including instructions. When the instructions are executed by a computer, the method performed by the first network device (for example, the first network device in FIG. 4, the network device in FIG. 5, the XR-C network element in FIG. 6, the AS in FIG. 7, or the OTT server in FIG. 8) in the foregoing method embodiment is implemented.

An embodiment of this application further provides a computer program product, including instructions. When the instructions are executed by a computer, the method performed by the second network device (for example, the second network device in FIG. 4, the network device in FIG. 5, the XR-M network element in FIG. 6, the MRF network element in FIG. 7, or the OTT server in FIG. 8) in the foregoing method embodiment is implemented.

An embodiment of this application further provides a communication system, including at least one of the foregoing terminal (for example, the terminal in FIG. 4, or the UE in FIG. 5 to FIG. 8), the foregoing first network device (for example, the first network device in FIG. 4, the network device in FIG. 5, the XR-C network element in FIG. 6, the AS in FIG. 7, or the OTT server in FIG. 8), and the foregoing second network device (for example, the second network device in FIG. 4, the network device in FIG. 5, the XR-M network element in FIG. 6, the MRF network element in FIG. 7, or the OTT server in FIG. 8).

For interpretations and beneficial effects of the related content in any one of the apparatuses provided above, refer to the corresponding method embodiment provided above. Details are not described herein again.

In several embodiments provided in this application, it should be understood that the disclosed apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used for implementation, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a special-purpose computer, a computer network, or any other programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A model inference method, comprising:
receiving model inference information from a first network device, wherein the model inference information is used by a terminal to perform inference of a first partial model related to a session; and
performing inference of the first partial model based on the model inference information, and sending an inference result of the first partial model to a second network device; or
receiving an inference result of a second partial model related to the session from the second network device, and performing inference of the first partial model based on the inference result of the second partial model and the model inference information.

2. The method according to claim 1, wherein before receiving the model inference information from the first network device, the method further comprises:
sending inference capability information of the terminal to the first network device.

3. The method according to claim 2, wherein the inference capability information comprises one or more of the following: available computing power for inference, inference precision, an available cache for inference, an artificial intelligence AI/deep learning ML framework and a version number for inference, or a supported intermediate data compression algorithm.

4. The method according to claim 3, wherein the available computing power for inference is determined by the terminal based on a configuration of a computing resource of the terminal, or the available computing power for inference is determined by the terminal based on a remaining computing resource or an available computing resource of the terminal.

5. The method according to any one of claims 1 to 4, wherein before receiving the model inference information from the first network device, the method further comprises:
sending information about the session and/or a current connection bandwidth of the terminal to the first network device.

6. The method according to any one of claims 1 to 5, wherein the model inference information comprises an identifier of the first partial model.

7. The method according to claim 6, wherein the model inference information further comprises one or more of the following: a quantity of parameters of the first partial model, a type of output data of inference, an intermediate data tensor shape, an intermediate data tensor structure, or an intermediate data compression algorithm.

8. The method according to claim 2, wherein sending the inference capability information to the first network device comprises:
sending a first message to the first network device, wherein the first message comprises the inference capability information, and the first message is a registration request message or a session call message.

9. The method according to any one of claims 1 to 8, wherein the second network device is an artificial intelligence AI/deep learning ML media plane network element, and the first network device is an AI/ML control plane network element; or the second network device is a media resource function network element, and the first network device is an application server; or the second network device is an internet service media server, and the first network device is an internet service signaling server.

10. The method according to claim 2, wherein sending the inference capability information of the terminal to the first network device comprises:
sending the inference capability information to the first network device when the second network device has a model inference capability.

11. The method according to claim 10, wherein before sending the inference capability information to the first network device when the second network device has the model inference capability, the method further comprises:
obtaining capability indication information of the second network device, wherein the capability indication information indicates that the second network device has the model inference capability.

12. A model inference method, comprising:
determining model inference information, wherein the model inference information is used by a terminal to perform inference of a first partial model related to a session; and
sending the model inference information to the terminal.

13. The method according to claim 12, wherein the model inference information comprises an identifier of the first partial model.

14. The method according to claim 13, wherein the model inference information further comprises one or more of the following: a quantity of parameters of the first partial model, a type of output data of inference, an intermediate data tensor shape, an intermediate data tensor structure, or an intermediate data compression algorithm.

15. The method according to any one of claims 12 to 14, wherein determining the model inference information comprises:
determining the model inference information based on one or more of the following: inference capability information of the terminal, inference capability information of a second network device, information about the session, or a current connection bandwidth of the terminal, wherein the second network device is configured to perform inference of a second partial model related to the session.

16. The method according to claim 15, wherein the method further comprises:
receiving the inference capability information of the terminal from the terminal.

17. The method according to claim 16, wherein the inference capability information of the terminal is carried in a registration request message or a session call message.

18. The method according to any one of claims 12 to 17, wherein before determining the model inference information, the method further comprises:
sending capability indication information of the second network device to the terminal, wherein the capability indication information indicates that the second network device has a model inference capability.

19. The method according to any one of claims 12 to 18, wherein the method further comprises:
sending an identifier of the second partial model related to the session to the second network device.

20. The method according to claim 19, wherein sending the identifier of the second partial model related to the session to the second network device comprises:
sending a resource request message to the second network device, wherein the resource request message comprises the identifier of the second partial model, the resource request message is used to request the second network device to reserve a resource, and the resource is used to perform inference of the second partial model.

21. The method according to claim 20, wherein the resource request information further comprises address information of the terminal.

22. The method according to claim 19, wherein sending the identifier of the second partial model related to the session to the second network device comprises:
sending indication information to the second network device, wherein the indication information indicates the second network device to perform inference of the second partial model, and the indication information comprises the identifier of the second partial model.

23. A model inference method, comprising:
receiving an identifier of a second partial model from a first network device; and
receiving an inference result of a first partial model from a terminal, and performing inference of the second partial model based on the inference result of the first partial model; or
performing inference of the second partial model, and sending, to the terminal, an inference result of the second partial model that is obtained by performing inference of the second partial model.

24. The method according to claim 23, wherein receiving the identifier of the second partial model from the first network device comprises:
receiving a resource request message from the first network device, wherein the resource request message comprises the identifier of the second partial model, the resource request message is used to request a second network device to reserve a resource, and the resource is used to perform inference of the second partial model.

25. The method according to claim 24, wherein the resource request message further comprises address information of the terminal.

26. The method according to claim 23, wherein receiving the identifier of the second partial model from the first network device comprises:
receiving indication information from the first network device, wherein the indication information indicates a second network device to perform inference of the second partial model, and the indication information comprises the identifier of the second partial model.

27. A communication apparatus, comprising a unit or a module for performing any one of the following:
the method according to any one of claims 1 to 11, the method according to any one of claims 12 to 22, or the method according to any one of claims 23 to 26.

28. A communication apparatus, comprising at least one processor, wherein the at least one processor is configured to execute a computer program stored in a memory, so that the apparatus performs any one of the following:
the method according to any one of claims 1 to 11, the method according to any one of claims 12 to 22, or the method according to any one of claims 23 to 26.

29. The apparatus according to claim 28, wherein the apparatus further comprises the memory and/or a communication interface, the communication interface is coupled to the processor, and the communication interface is configured to input and/or output information.

30. A communication system, comprising:
a terminal, a first network device, and a second network device, wherein the terminal is configured to perform the method according to any one of claims 1 to 11, the first network device is configured to perform the method according to any one of claims 12 to 22, and the second network device is configured to perform the method according to any one of claims 23 to 26.

31. A communication system, comprising:
a first network device and a second network device, wherein the first network device is configured to perform the method according to any one of claims 12 to 22, and the second network device is configured to perform the method according to any one of claims 23 to 26.

32. A computer-readable storage medium, comprising a computer program, wherein when the computer program is run on a computer, the computer is caused to perform any one of the following:
the method according to any one of claims 1 to 11, the method according to any one of claims 12 to 22, or the method according to any one of claims 23 to 26.

33. A computer program product, wherein the computer program product comprises computer program code, wherein
when the computer program code is run on a computer, the computer is caused to implement any one of the following:
the method according to any one of claims 1 to 11, the method according to any one of claims 12 to 22, or the method according to any one of claims 23 to 26.
